# EUROPÄISCHE PATENTSCHRIFT

(11) **EP 1 421 411 B1**
(45) Veröffentlichungstag und Bekanntmachung des Hinweises auf die Patenterteilung: **10.12.2008**
(21) Anmeldenummer: 02797567.1
(22) Anmeldetag: 02.08.2002
(51) Int. Cl.: G01T 1/164, G01T 1/29

(54) **VERFAHREN FÜR SPECT-UNTERSUCHUNGEN**
SPECT EXAMINATION METHOD
PROCEDE D'EXAMEN PAR TOMOGRAPHIE D'EMISSION MONOPHOTONIQUE

(30) Priorität: 31.08.2001 DE 10142421
(43) Veröffentlichungstag der Anmeldung: 26.05.2004
(73) Patentinhaber: Forschungszentrum Jülich GmbH, 52425 Jülich (DE); Scivis GmbH, Wissenschaftliche Bildverarbeitung, 37095 Göttingen (DE)
(72) Erfinder: SCHRAMM, Nils, 52070 Aachen (DE); HALLING, Horst, 52459 Inden-Pier (DE); EBEL, Gernot, 37083 Göttingen (DE)
(74) Vertreter: Gille Hrabal Struck Neidlein Prop Roos
(86) Internationale Anmeldenummer: PCT/EP2002/008604
(87) Internationale Veröffentlichungsnummer: WO 2003/021292

(56) Entgegenhaltungen:
- EP-A- 1 006 370
- WO-A-00/25268
- WO-A-01/52269
- US-A- 5 245 191
- US-A- 5 462 056
- IVANOVIC M ET AL: "Multi-pinhole collimator optimization for high resolution SPECT imaging" NUCLEAR SCIENCE SYMPOSIUM, 1997. IEEE ALBUQUERQUE, NM, USA 9-15 NOV. 1997, NEW YORK, NY, USA,IEEE, US, 9. November 1997 (1997-11-09), Seiten 1097-1101, XP010275634 ISBN: 0-7803-4258-5
- MEIKLE, STEVEN R ET AL.: IEEE TRANSACTIONS ON NUCLEAR SCIENCE, Bd. 48, Nr. 3, Juni 2001 (2001-06), Seiten 816-821, XP011042003 New York, US

## Beschreibung

Die Erfindung betrifft ein Verfahren zur Tomographie, insbesondere zur Einzelgammaquanten-Tomographie (SPECT).

Die Einzelphotonen-Tomographie bezieht sich auf ein Verfahren nebst zugehörigen Vorrichtungen zur dreidimensionalen Darstellungen von Radiopharmaka, die in ein Objekt gebracht wurden. Als Objekt können Menschen oder Tiere vorgesehen sein. Die in das Objekt gebrachten Radiopharmaka senden Gammaquanten. Die Gammaquanten werden von der Vorrichtung erfasst und ausgewertet. Als Ergebnis der Auswertung wird die Lage, also die räumliche Verteilung der Radiopharmaka im Objekt erhalten. Die Lage der Radiopharmaka erlaubt wiederum Rückschlüsse auf das Objekt, so zum Beispiel auf eine Verteilung von Gewebe im Objekt.

Eine bekannte Vorrichtung zur Durchführung einer EinzelGammaquanten-Tomographie umfasst eine Gammakamera und einen vorgeschalteten Kollimator. Beim Kollimator handelt es sich im allgemeinen um eine Bleiplatte mit einer Vielzahl von senkrecht durch die Platte führenden Kanälen. Durch das Vorsehen der Kanäle wird sichergestellt, dass einerseits nur senkrecht einfallende Gammaquanten erfasst werden und andererseits eine ortsauflösende Messung möglich ist. Die Kamera wird samt Kollimator um das Objekt herum verfahren. Hierdurch erhält man eine Vielzahl von Ortsinformationen. Es handelt sich dabei um sogenannte Projektionsaufnahmen. Aus den gewonnenen Ortsinformationen rund um das Objekt herum kann anschließend die Lage der Radiopharmaka im Objekt ermittelt werden.

Um von den Gammaquanten verursachte Streustrahlung ausblenden zu können, wird im allgemeinen noch eine Energieinformation benötigt. Die Kamera ist daher in der Regel so beschaffen, dass mit ihr sogleich die Energie der einfallenden Gammaquanten ermittelt werden kann.

Streustrahlung weist grundsätzlich eine geringere Energie auf im Vergleich zur eigentlichen Messstrahlung. Es kann so Streustrahlung ausgeblendet werden, indem Gammaquanten mit niedriger Energie nicht berücksichtigt werden. Eine Obergrenze der Energie der Gammaquanten festzulegen kann ebenfalls von Interesse sein, um Hintergrundstrahlung ausblenden zu können.

Das vorbeschriebene Verfahren bzw. die vorbeschriebene Vorrichtung gehört zum allgemeinen Fachwissen, da solche Verfahren und Vorrichtungen seit mehr als dreißig Jahren eingesetzt werden.

Die EinzelGammaquanten-Tomographie (SPECT) und die Positronen-Emissionstomographie (PET) stellen Instrumente zur quantitativen Darstellung räumlicher Radiotracer-Verteilungen in vivo dar. Außer in der Humanmedizin lassen sich diese Verfahren in der pharmakologischen und präklinischen Forschung zur Entwicklung und Evaluation neuartiger Tracer-Verbindungen einsetzen. Während in der PET heute diverse Systeme zur Untersuchung kleiner Labortiere zur Verfügung stehen, hat es im Bereich der SPECT entsprechende Entwicklungen bisher nicht oder in nur unzureichendem Maße gegeben, und das obwohl TC-99m und I-123-markierte Radiopharmaka in der Nuklearmedizin eine ungleich höhere Bedeutung haben als die PET-Nuklide.

Mit einem hochauflösenden und hochsensitiven Tier-SPECT ergäbe sich für die präklinische Forschung der Vorteil eines tierschonenden Verfahrens, mit dem sich aussagekräftige Studien dynamisch und wiederholbar an einem Individuum durchführen ließen. Dies wird dadurch begünstigt, dass sich bei den oben genannten Radioisotopen extrem hohe spezifische Aktivitäten erzielen lassen (ca. Faktor 100 gegenüber PET-Nukliden), welche für störungsfreie in vivo Messungen unerlässlich sind (geringe Massendosis). Hierzu sind begleitende Entwicklungen entsprechender Markierungsmethoden durchzuführen.

Um die Ortsauflösung gegenüber dem eingangs genannten Stand der Technik zu verbessern, wird ein Loch-Kollimator bei der EinzelGammaquanten-Tomographie eingesetzt. Ein Loch-Kollimator zeichnet sich durch ein einzelnes Loch aus, durch das die Gammaquanten hindurchtreten. Befindet sich das Objekt näher am Loch-Kollimator als die Oberfläche einer Gammakamera bzw. eines Detektors, so wird hierdurch schließlich eine vergrößerte Ortsauflösung erreicht. Durch den Loch-Kollimator hindurch treten die Gammaquanten nicht ausschließlich senkrecht. Stattdessen treten sie kegelförmig ein und wieder aus. Da der hinter dem Loch-Kollimator liegende Kegel größer ist als der Kegel vor dem Loch-Kollimator, wird im Ergebnis eine Verbesserung der Ortsauflösung im Vergleich zum eingangs genannten Stand der Technik erreicht.

In einem Loch-Kollimator ist eine kleine Durchtrittsöffnung bzw. ein kleines Loch vorzusehen, durch das die Gammaquanten hindurchtreten, um eine gute Ortsauflösung zu erhalten. Je kleiner ein Loch jedoch ist, desto weniger Gammaquanten treten durch dieses Loch hindurch. Mit kleiner werdendem Loch sinkt daher nachteilhaft die Sensitivität der Vorrichtung. Sensitivität ist definiert als das Verhältnis von gemessener Zählrate zur im Objekt vorhandenen Aktivität.

Wird die Sensitivität zu gering, so ist schließlich die Durchführung einer EinzelGammaquanten-Tomographie nicht mehr möglich.

Aus der Druckschrift US 5,245,191 ist ein Tomographieverfahren bekannt, bei dem ein Multi-Loch-Kollimator eingesetzt wird. Diese Druckschrift enthält die Lehre, dass die Auflösung umso größer ist, um so kleiner der Abstand zwischen einem Objekt und dem Multi-Loch-Kollimator bzw. umso größer der Abstand zwischen dem Detektor und dem Multi-Loch-Kollimator gewählt wird. Allerdings ist der Druckschrift zu entnehmen, dass schließlich auf den Detektor auftreffende Projektionen überlappen können, was als problematisch beschrieben wird.

Die Druckschrift "Meikle, Steven et al.: IEEE Transactions on Nuclear Science, Bd. 48, Nr. 3, Juni 2001 (2001-06), Seiten 816-821, XP011042003 New York, US" beschreibt einige Ergebnisse einer Computersimulation, mit der verschiedene Situationen eines Tomographieverfahrens unter Verwendung eines Multi-Loch-Kollimators und eines Rekonstruktionsalgorithmus untersucht werden.

Aufgabe der Erfindung ist die Schaffung eines Verfahrens der eingangs genannten Art, mit der hochauflösend und hochsensitiv gemessen werden kann.

Die Aufgabe der Erfindung wird mit einem Verfahren nach Anspruch 1 gelöst.

Die für die Durchführung des Verfahrens verwendete Vorrichtung umfasst einen Multi-Loch-Kollimator nebst einem Detektor zur Erfassung der Gammaquanten, die durch den Multi-Loch-Kollimator hindurchtreten. Der Kollimator weist also eine Mehrzahl an Durchtrittsöffnungen auf. In einer Ausgestaltung der Erfindung ist der Detektor so beschaffen, dass dieser auch die Energie der auftreffenden Gammaquanten zu bestimmen vermag.

Da der Kollimator mehrere Löcher aufweist, steigt die Sensitivität der Vorrichtung entsprechend an. Der Einsatz eines Loch-Kollimators hat gegenüber dem Einsatz solcher Kollimatoren, mit denen nur senkrecht einfallende Strahlen erfasst werden, den Vorteil der hohen Ortsauflösung. Somit steht eine Vorrichtung mit guter Ortsauflösung und guter Sensitivität zur Verfügung.

Während des Betriebes der Vorrichtung befindet sich das Objekt näher am Multi-Loch-Kollimator als die Kamera- bzw. Detektoroberfläche, um eine gute Ortsauflösung zu erzielen. Bei der Vorrichtung befindet sich die Halterung für das Objekt (Patientenliege) daher näher am Multi-Loch-Kollimator als die Kamera bzw. der Detektor.

Die Abstände der einzelnen Durchtritte oder Löcher im Multi-Loch-Kollimator sind so gewählt, dass sich die Kegel, die auf der Kamera auftreffen, allenfalls teilweise überschneiden. Zur Erzielung einer guten Ortsauflösung sowie guter Sensitivität ist es vorteilhaft, Überschneidungsbereiche zuzulassen. Diese betragen in einer Ausgestaltung der Erfindung nicht mehr als 30%, vorzugsweise bis zu 70% der Gesamtfläche eines Kegels, der durch die Gammaquanten gebildet wird, die durch ein Loch des Multi-Loch-Kollimators hindurchtreten.

In der herkömmlichen Loch-Tomographie (Pinhole-Tomographie) liegt das Lochzentrum auf der Mittensenkrechten des Detektors. Ferner steht die Loch-Achse, d. h. die Symmetrieachse des Kollimatorlochs, senkrecht zum Detektor. Es wird dann ein Rekonstruktionsverfahren verwendet, bei dem davon ausgegangen wird, dass das Gammaquant, welches vom Zentrum des Objekts auf die Kamera fällt ,mit der Kameraoberfläche einen rechten Winkel bildet. Die Grundfläche des Kegels, die auf der Kamera abgebildet wird, ist dann grundsätzlich kreisförmig.

Diese Situation ist beim Einsatz eines Multi-Loch-Kollimators vielfach nicht der Fall. Es wird daher ein Rekonstruktionsverfahren bereit gestellt, welches die abweichenden Bedingungen berücksichtigt. Fällt ein vom Zentrum des Objekts stammendes Gammaquant nicht mehr senkrecht auf die Oberfläche der Kamera bzw. des Detektors auf, so wird kein kreisförmiger Kegel (idealisierter Zustand) auf der Kameraoberfläche abgebildet. Stattdessen bildet sich der Kegel grundsätzlich in Form einer Ellipse auf der Kamera ab. Erfindungsgemäß wird dieses Problem gelöst, indem ein iteratives Rekonstruktionsverfahren eingesetzt wird. Ausgangspunkt des iterativen Rekonstruktionsverfahrens ist eine angenommene Verteilung im Objekt und zwar in der Regel eine räumliche Verteilung. Es wird dann berechnet, welches Messergebnis die angenommene Verteilung erzielen würde. Das berechnete Ergebnis wird mit dem tatsächlich gemessenen verglichen. Anschließend wird eine neue geänderte Verteilung genommen. Wiederum wird das auf der Kamera abgebildete Ergebnis dieser neuen Verteilung berechnet. Es wird erneut verglichen. Es wird festgestellt, ob die neue Verteilung dem gemessenen Ergebnis besser entspricht. Auf diese Weise wird nach Durchführung hinreichend vieler Schritte eine Verteilung ermittelt, deren berechnetes Ergebnis mit dem tatsächlichen Ergebnis (Messergebnis) hinreichend gut übereinstimmt. Das iterative Rekonstruktionsverfahren ist insbesondere dann beendet, wenn mit einer vorgegebenen Genauigkeit das berechnete Ergebnis mit dem gemessenen übereinstimmt. Das Iterationsverfahren umfasst also eine sogenannte Vorwärtsprojektion, also die Berechnung des Ergebnisses einer angenommenen Verteilung.

Das iterative Verfahren weist ferner den Vorteil auf, dass Überlappungsbereiche der auf der Kamera- bzw. Detektoroberfläche abgebildeten Kegel berechnet und mit dem tatsächlichen Ergebnis verglichen werden können. Es ist daher auch aus diesem Grund anderen Rekonstruktionsverfahren vorzuziehen. Es ist also so möglich, Überlappungsbereiche zuzulassen und so zu guten Ortsauflösungen zu gelangen.

In einer Ausgestaltung der Erfindung umfasst der Mulit-Loch-Kollimator eine Platte, die aus Wolfram und Iridium gefertigt ist. Diese Materialien besitzen einen besseren Schwächungskoeffizienten gegenüber Gammaquanten im Vergleich zu Blei. Iridium ist unter den genannten Materialien am besten geeignet, um Gammaquanten zu schwächen. Iridium ist jedoch sehr teuer. Daher wird aus Kostengründen Wolfram an den Stellen eingesetzt, bei denen die Anforderungen an das Schwächungsverhalten weniger groß sind. Aus Iridium werden die Teile der Platte gefertigt, bei denen die Anforderungen an die Schwächung von Gammaquanten besonders groß sind. Es handelt sich dabei insbesondere um die Bereiche der Platte, die an die Löcher angrenzen.

Ein Loch in der Platte mündet vorteilhaft von beiden Seiten trichterförmig in die Platte ein. Hier sind die Anforderungen an die Schwächung besonders groß und zwar insbesondere an der Lochwandung. Daher sind die Trichterwände bevorzugt aus Iridium gefertigt. Die Platte ist dann typischerweise 3 bis 10 mm dick.

Gammaquanten, die vom Inneren des Objektes ausgehen, werden in der Regel gewebeabhängig geschwächt. Gemäß Stand der Technik wird zur Berücksichtigung dieser Schwächung bei der Auswertung von einem homogenen Schwächungskoeffizienten ausgegangen, der dem Schwächungskoeffizienten von Wasser entspricht. Daneben ist die Schwächung von den Umrissen des Objektes abhängig. In einer Ausgestaltung der Erfindung wird im Rahmen der Auswertung der äußere Umriss des Objektes ermittelt und die Schwächung in Abhängigkeit vom Umriss kalkuliert. Auf diese Weise werden weiter verbesserte Ergebnisse erhalten.

Maß für den äußeren Umriss des Objektes ist die Compton-Streustrahlung. In einer Ausgestaltung der Erfindung wird daher die Compton-Streustrahlung zum Beispiel in einem sogenannten Compton-Fenster gemessen. Im Rekonstruktionsverfahren wird die Compton-Streustrahlung berücksichtigt und hieraus der Umriss des Objektes ermittelt.

Trifft ein Gammaquant auf eine Kamera bzw. den Detektor auf, so wird der Ort des Auftreffens mit einer kamera- oder detektortypischen Ungenauigkeit gemessen. In einer weiteren Ausgestaltung des Verfahrens wird bei der Vorwärtsprojektion, die dem iterativen Rekonstruktionsverfahren zugrunde liegt, die Abbildungseigenschaft, also die kamera- oder detektortypische Ungenauigkeit bei der Auswertung berücksichtigt. Wiederum gelingt die Berücksichtigung der Messungenauigkeit durch ein Iterationsverfahren der vorgenannten Art zuverlässig.

Befindet sich eine im Objekt befindliche strahlende Quelle verhältnismäßig weit von dem Multi-Loch-Kollimator entfernt (also in einem Bereich des Objekts, der besonders weit weg vom Kollimator liegt), so nimmt die Sensitivität ab. In einer Ausgestaltung des Rekonstruktionsverfahrens wird bei der Vorwärtsprojektion diese abnehmende Sensitivität berücksichtigt.

Das Abbildungsverhalten der Kamera bzw. des Detektors hängt ebenfalls von der Entfernung ab, die zwischen der strahlenden Quelle und dem Multi-Loch-Kollimater besteht. Dieses sich entfernungsabhängig ändernde Abbildungsverhalten wird in einer Ausgestaltung des Verfahrens ebenfalls iterativ berücksichtigt.

Nachfolgend werden einschlägige Programmteile für ein Iterationsverfahren angegeben, welches die vorgenannten erfindungsgemäßen Schritte abzuarbeiten vermag. Die Programme umfassen die nachfolgend genannten Eingabe-Parameter. Ferner werden typische Werte solcher Eingabeparameter angegeben. Der Begriff "Pinhole" wird synonym für den Begriff "Loch" (des Multi-Loch-Kollimators) verwendet.

Soweit die Berechnung der Kontur bzw. des Umrisses des Objekts betroffen ist, wird die Berechnung der Objektkontur in einer Ausführungsform in der "nullten" Iteration vorgenommen. Eine eigentlich die Bildqualität degradierende Eigenschaft der Comptonstreuung wird hierfür ausgenutzt: die richtungsfalsch detektierten Gammaquanten.

Richtungsfalsch detektierte Gammaquanten stellen einen Untergrund in den Projektionen dar, der nachhaltig die Bildqualität verschlechtert. Sie können jedoch auch von Nutzen sein. Sie bewirken, dass in praktisch allen klinischen Fällen die gesamte Ausdehnung des Patienten in den Projektionen erscheint. Auch wenn sich ein Tracer, also ein Radiopharmakon sehr spezifisch an einem eng umgrenzten Organ anlagern sollte, so scheinen dennoch auch Quanten von allen anderen zur Abbildung gebrachten Bereichen des Patienten zu stammen. Tatsächlich sind dies Quanten, die ihren Ursprung in dem eng umgrenzten Organ haben, aufgrund der Comptonstreuung jedoch scheinen sie den ganzen Patienten zu "illuminieren". Dieser Umstand wird ausgenutzt, um die Objektkontur zu berechnen.

Die Berechnung erfolgt mehrstufig:
1) Erstellung "binärer" Projektionen. Sie stellen eine Vereinfachung der eigentlichen Projektionen dar, insofern, dass bei ihnen jeder Pixelinhalt größer Null auf Eins gesetzt wird.
   Wesentlich dafür ist eine benutzergeführte Schwellsetzung, die nach Schlüssigkeit die Projektion des eigentlichen Untersuchungsobjektes, des Patienten also, vom Hintergrund separiert. Die Berechnung der Schwelle orientiert sich an einem gemittelten Maximum, das aus sämtlichen Projektionen gebildet wird.
2) Rückprojektion der binären Projektionen in den Objektraum.
3) Anhand der "Vielfachheit" der Voxel (kleines meist kubisches Volumenelement), d.i. die Häufigkeit, mit der ein Voxel unter der jeweiligen Kollimatorgeometrie über alle Winkel von den Projektionen gesehen wird, setzt eine (für die jeweilige Geometrie heuristisch ermittelte) Schwelle fest, welche Voxel in allererster Näherung zum Körperbinnenraum gehören. (Die Begrenzung des Körperbinnenraumes ist die Körperkontur.)
4) Mehrmalige Faltung mit 3d-Faltungskern
5) Wiederholung Punkt 3
6) Zweimaliges Durchlaufen von:
   a) 3d-Faltung
   b) Hinzunahme der Voxel, in die etwas hineingefaltet wurde, zum Körperinnenraum.

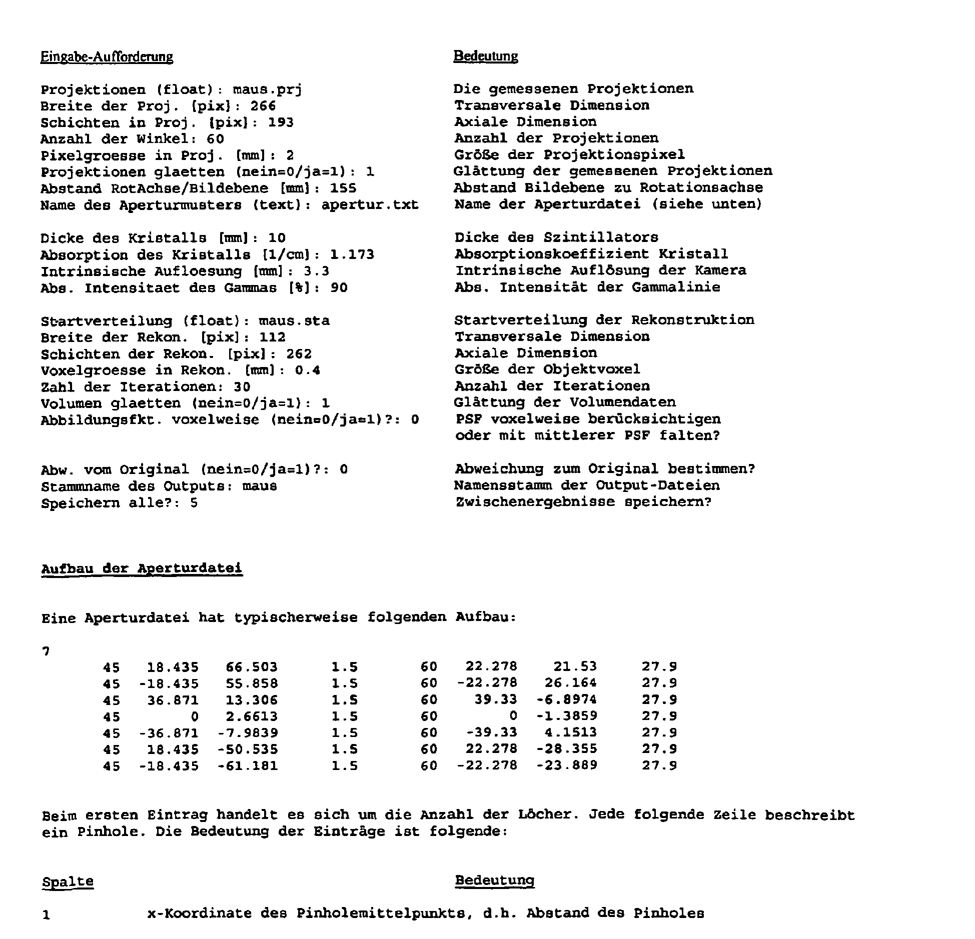

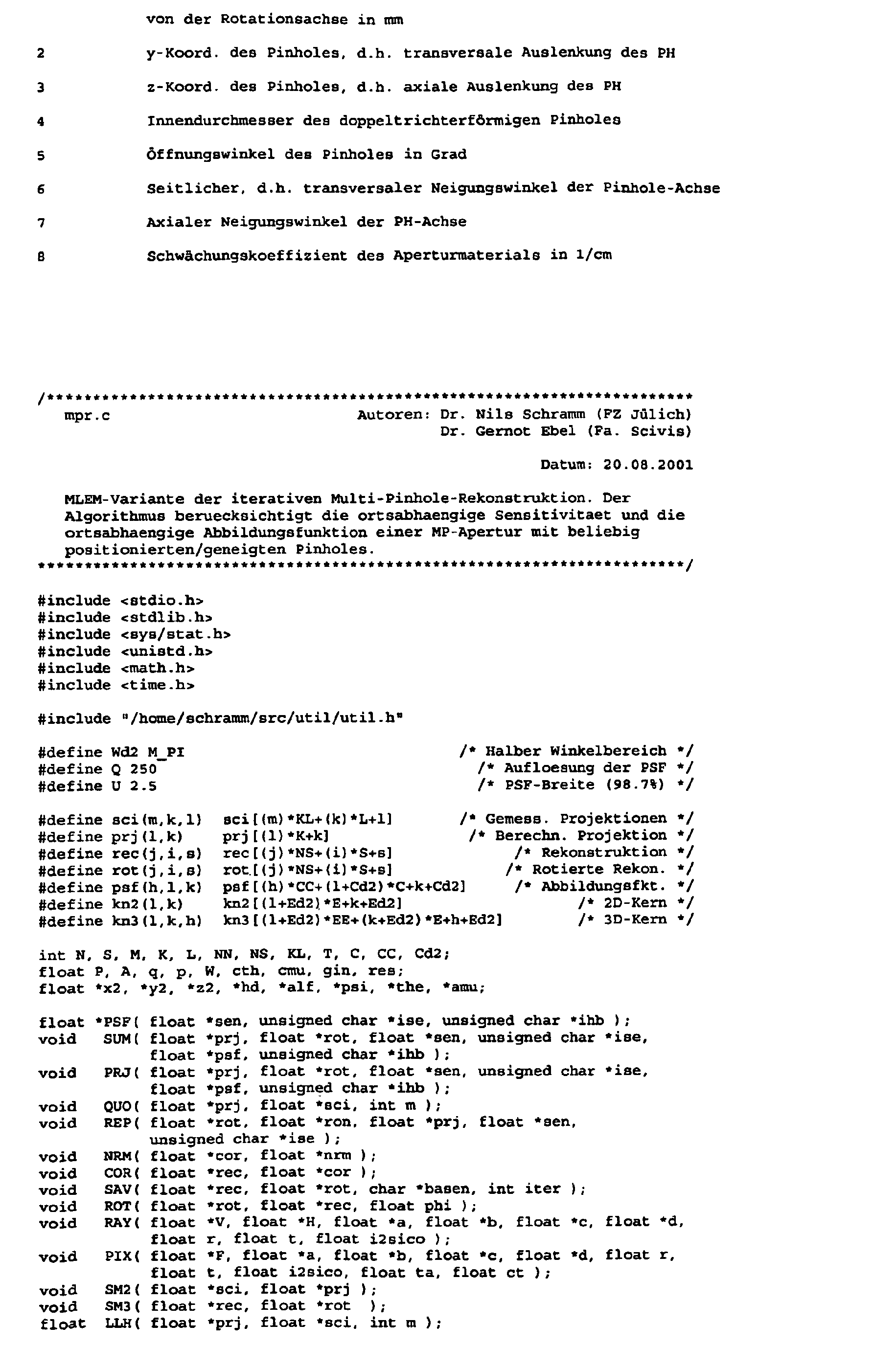

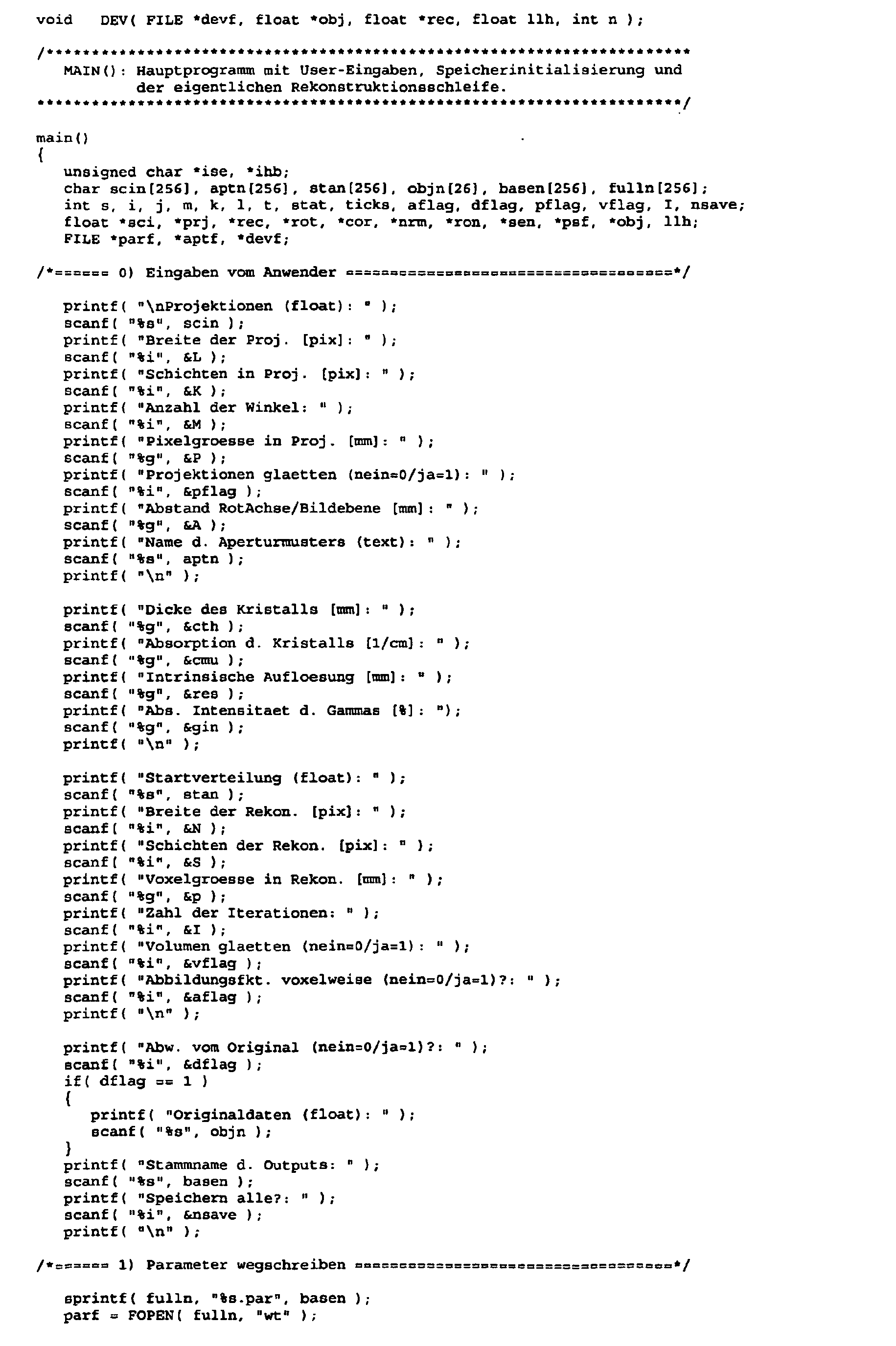

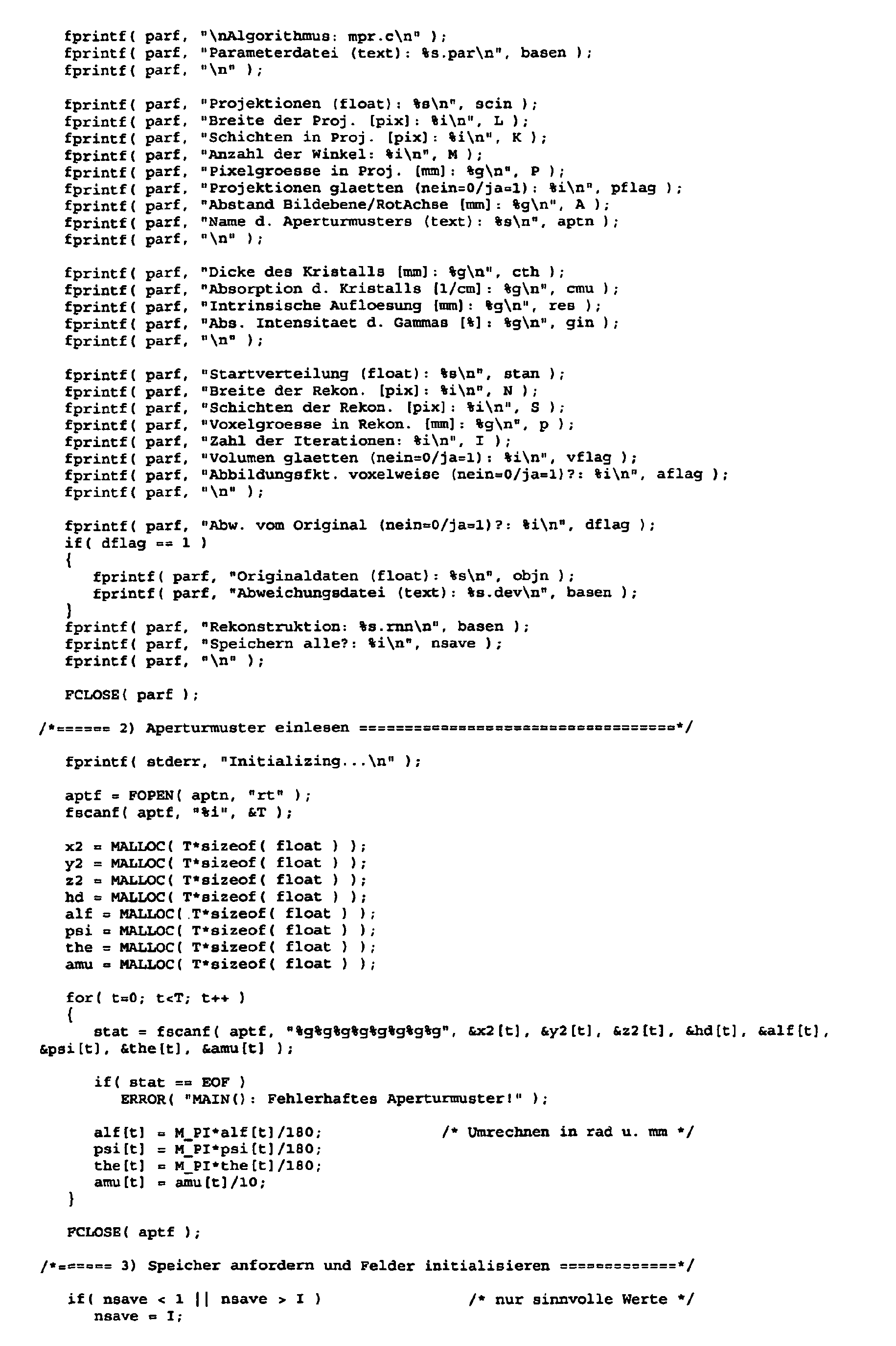

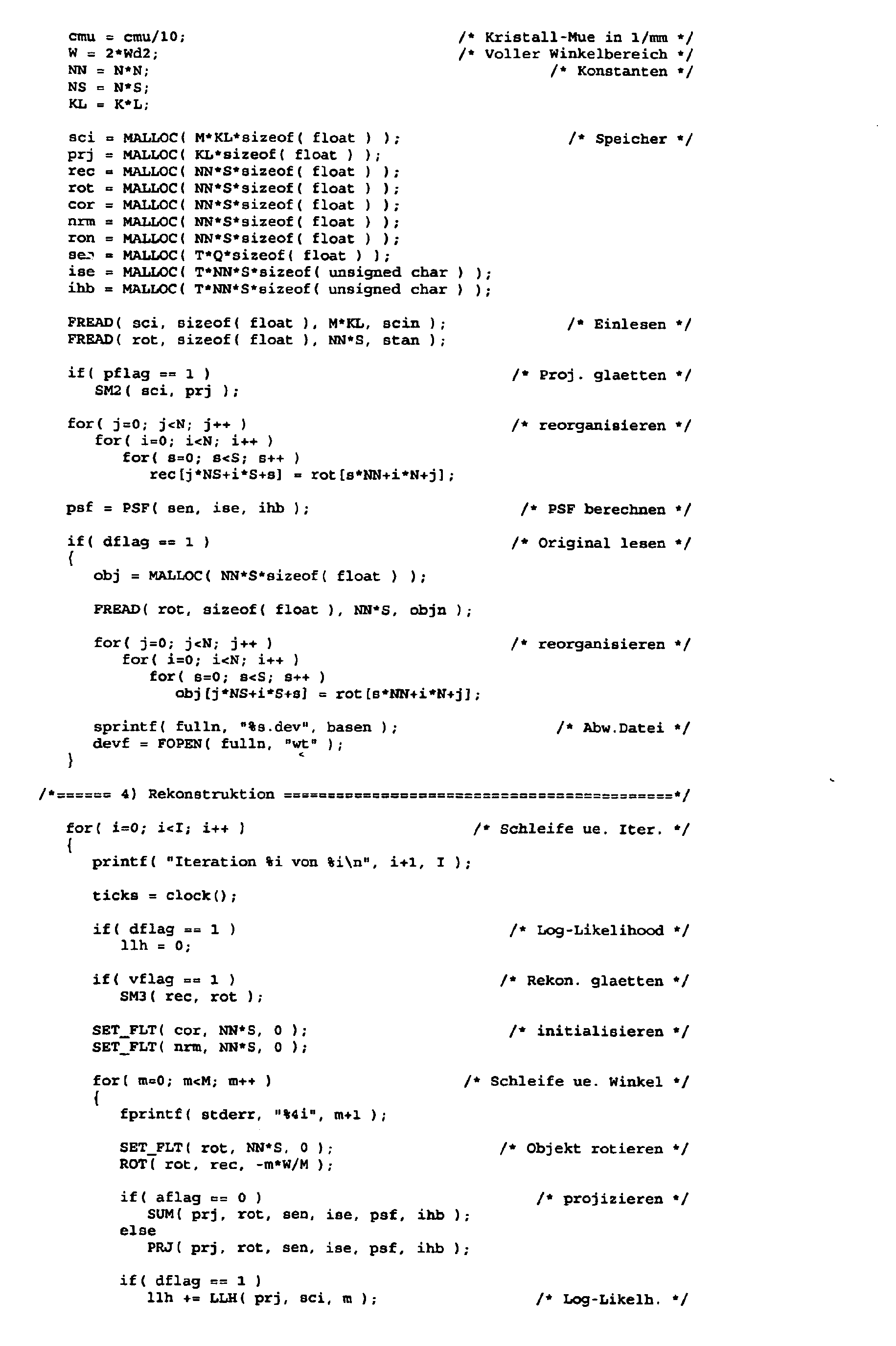

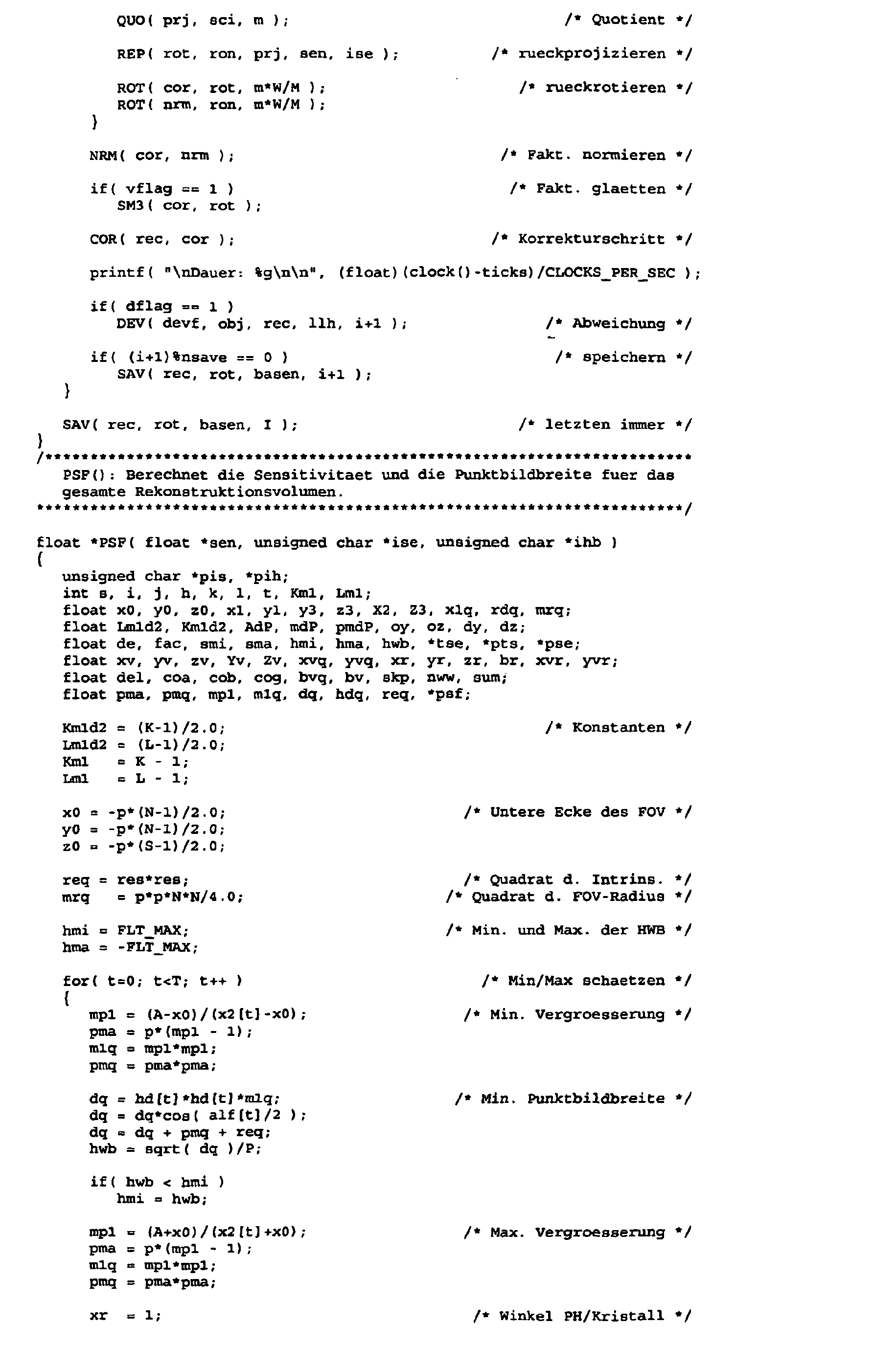

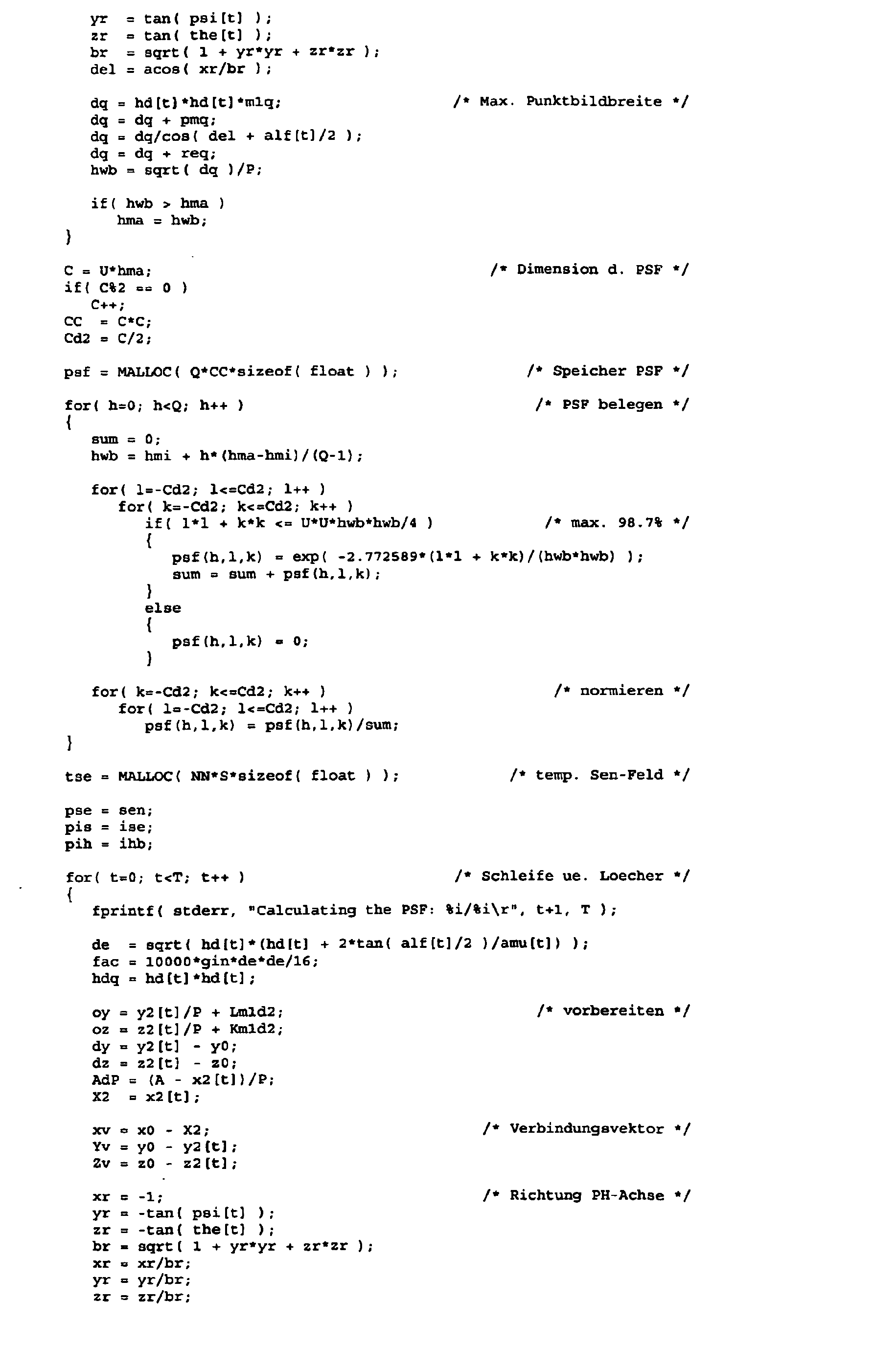

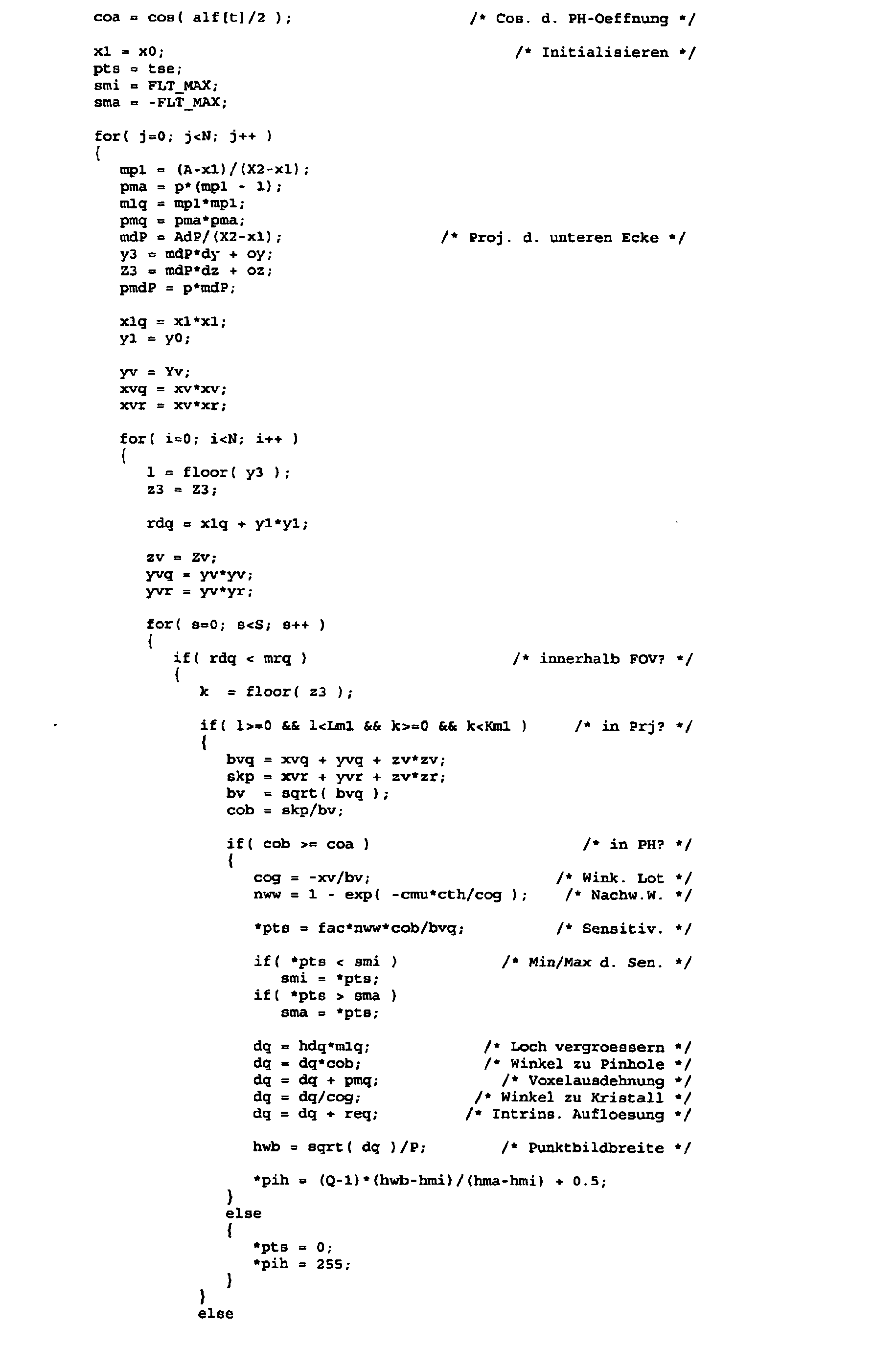

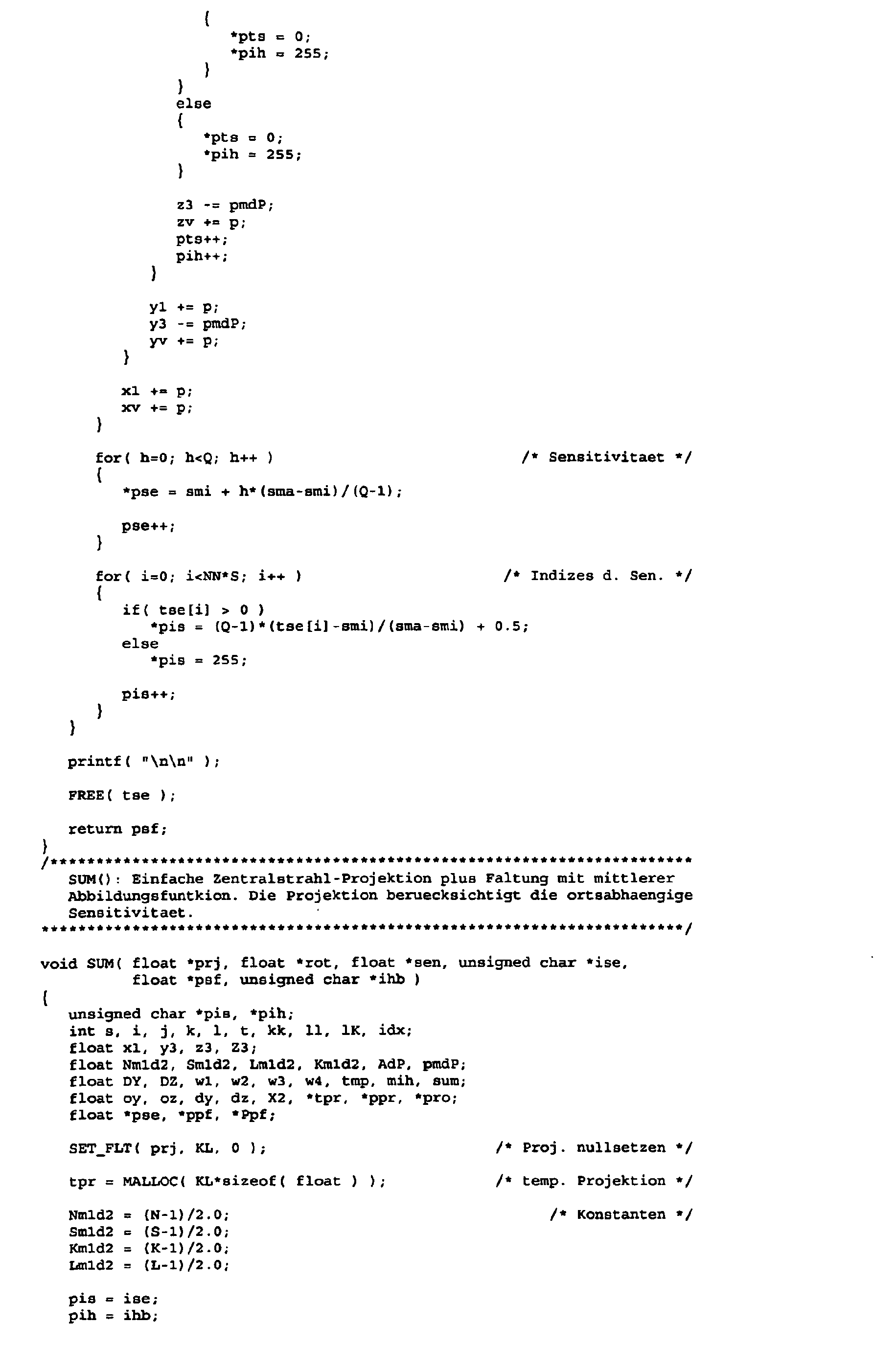

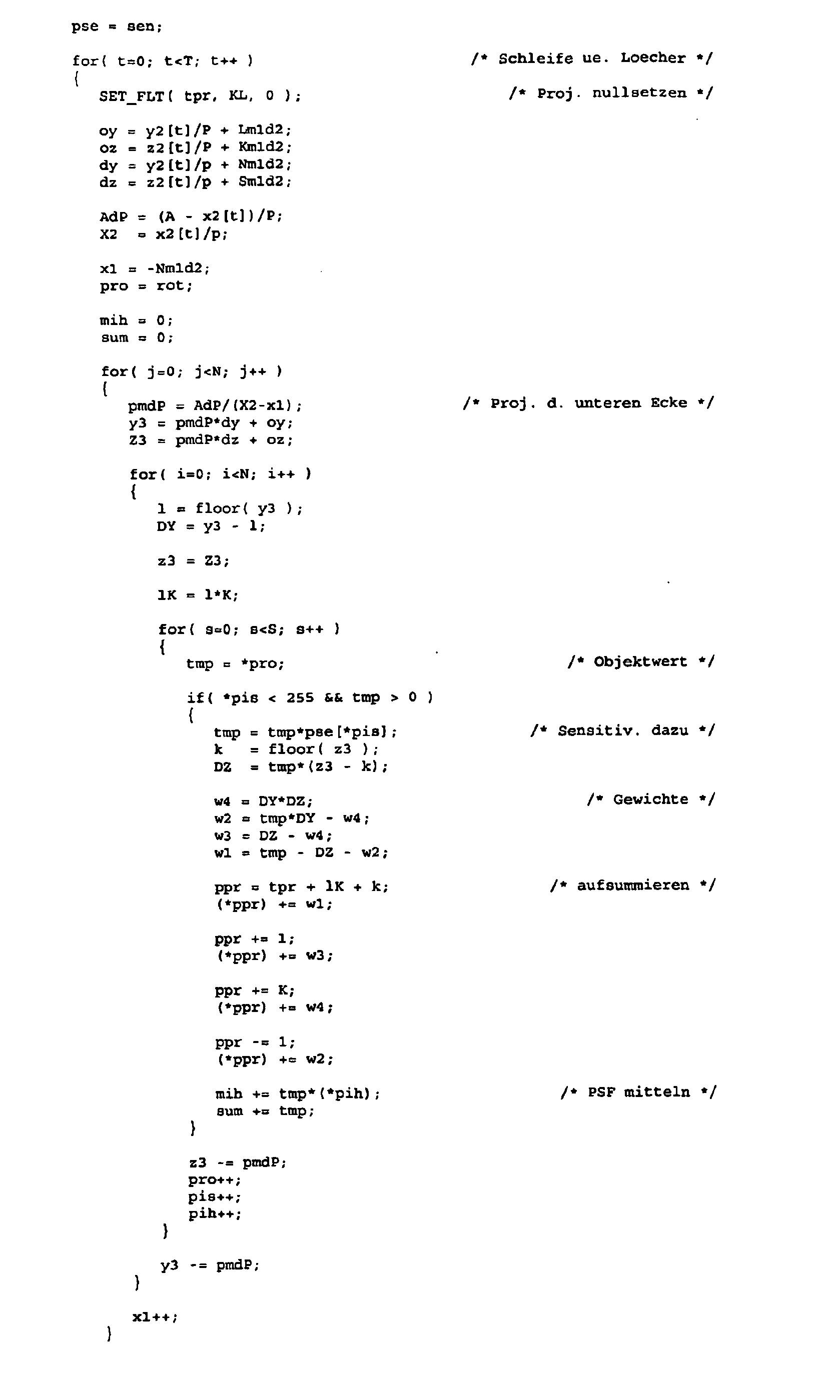

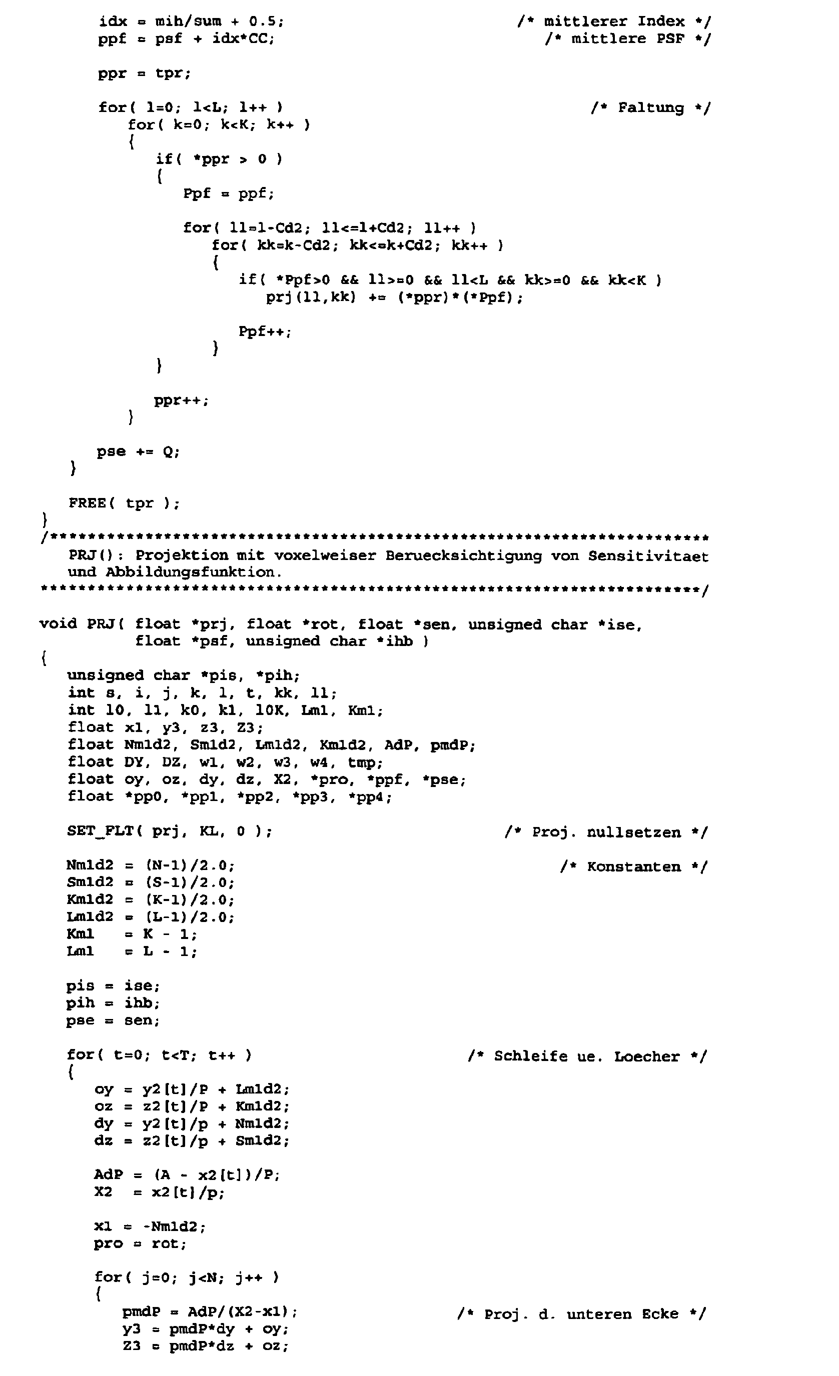

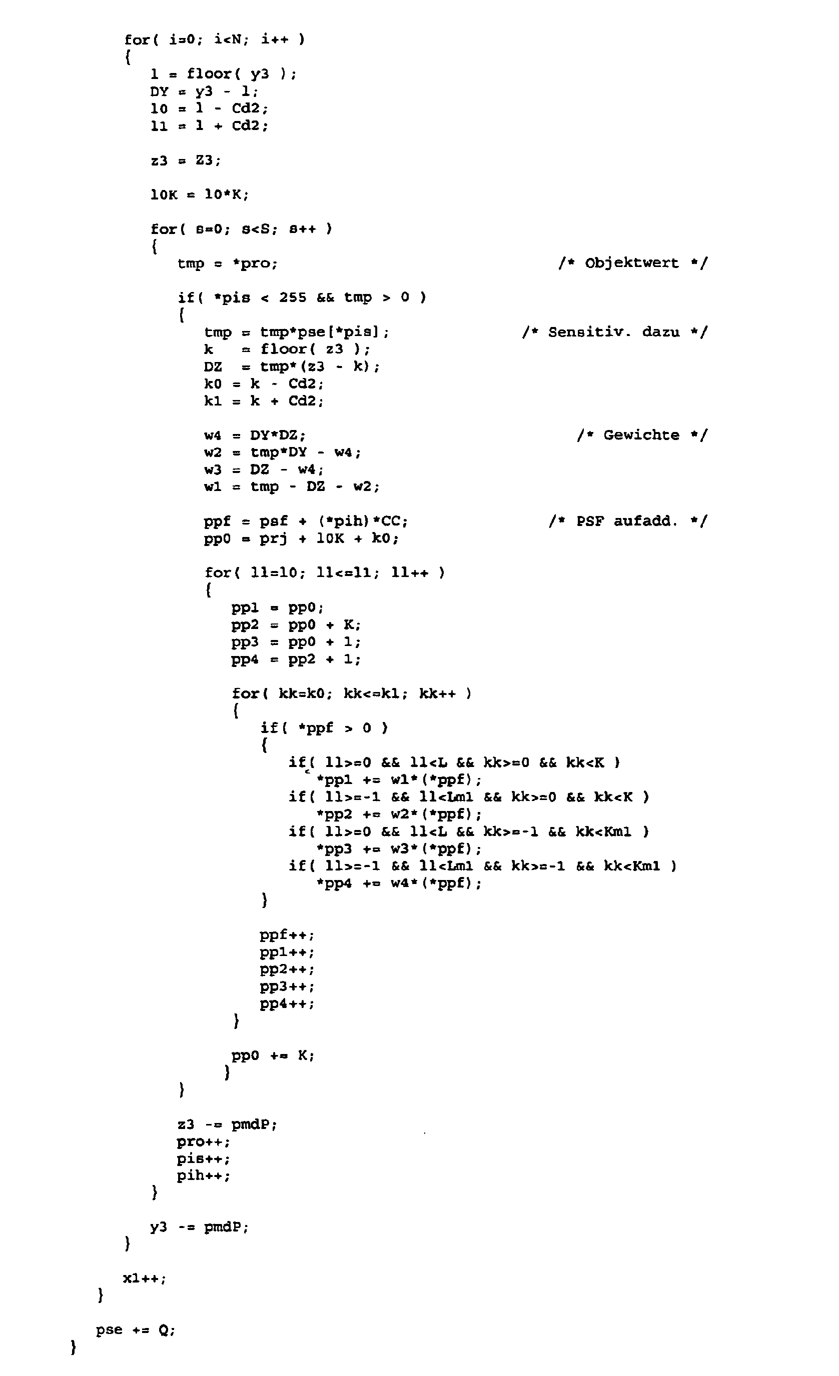

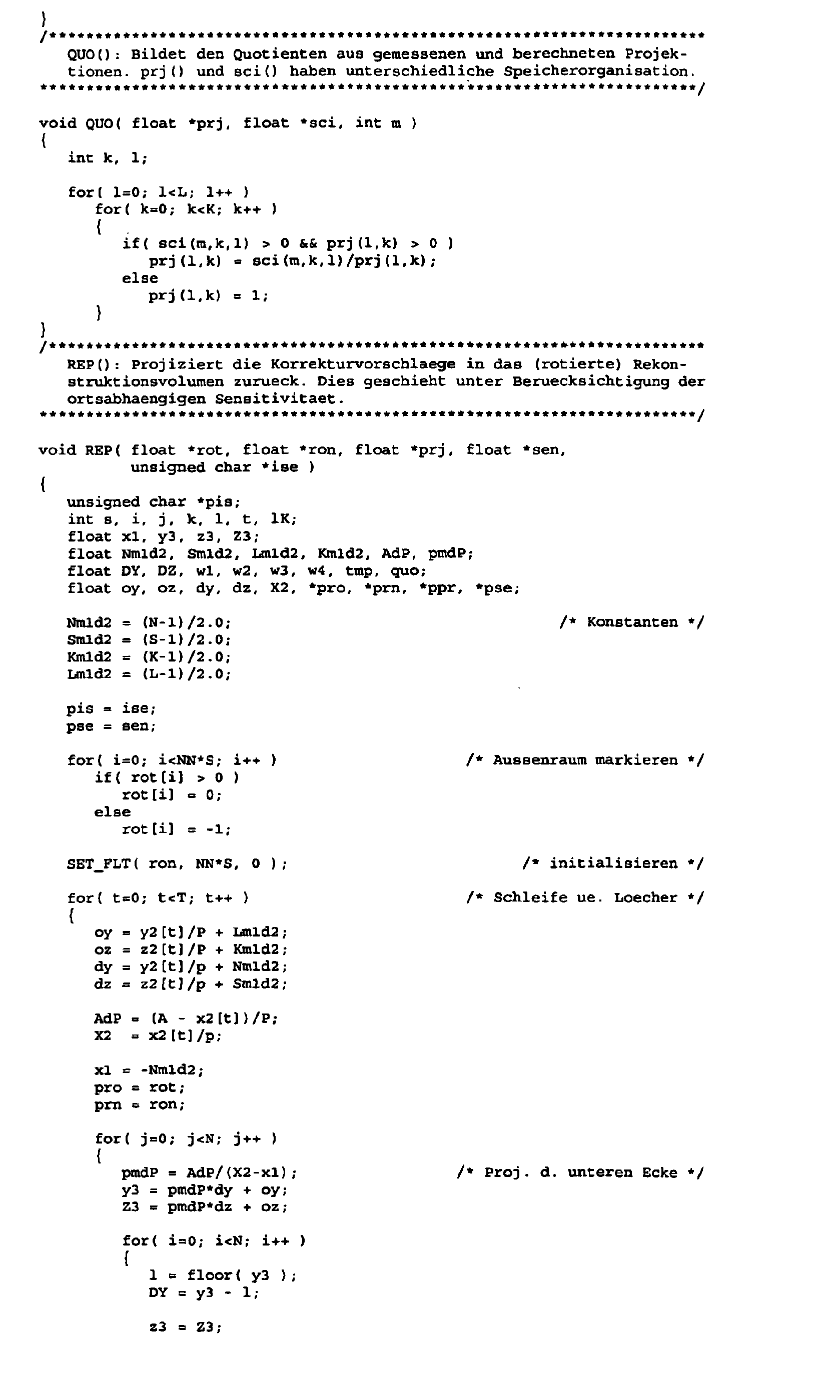

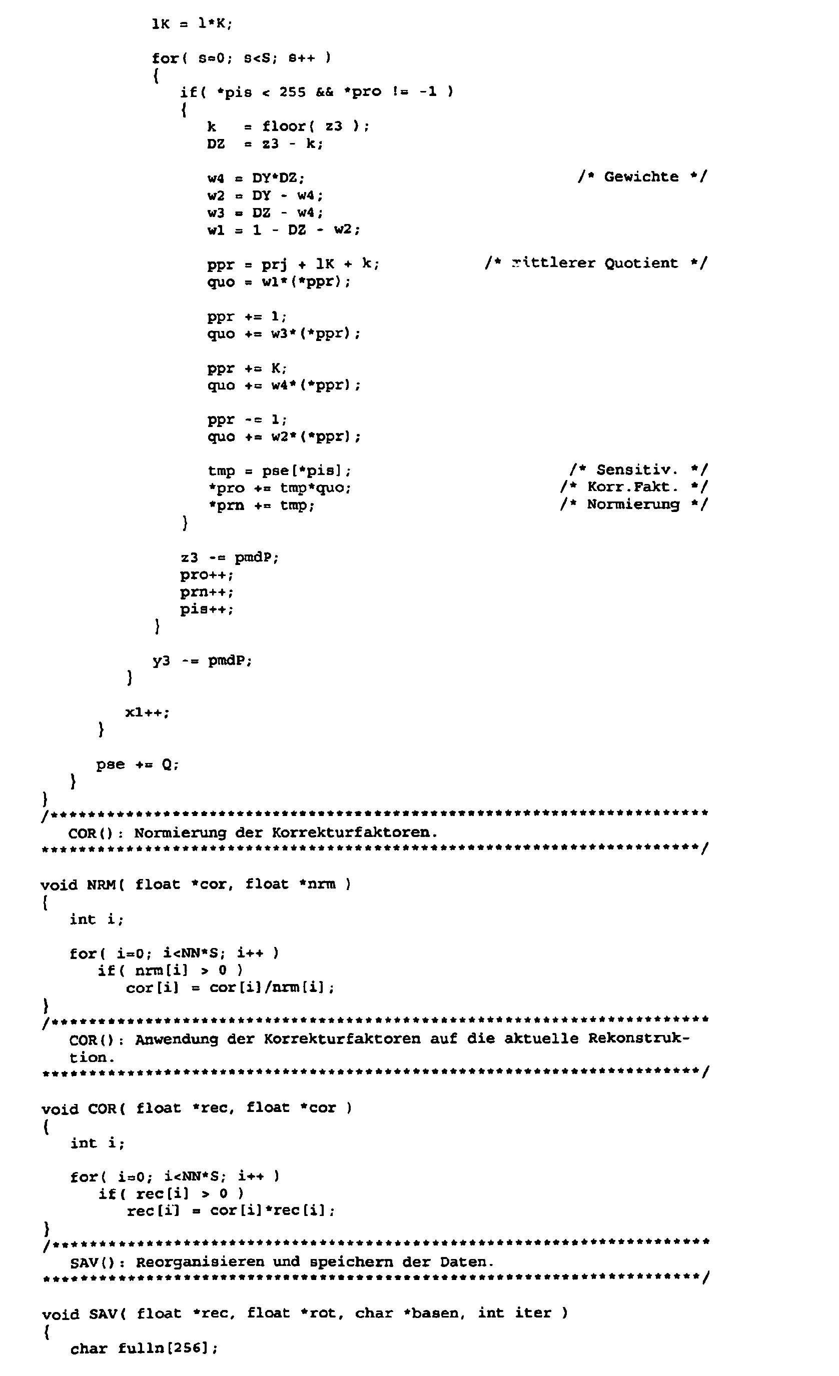

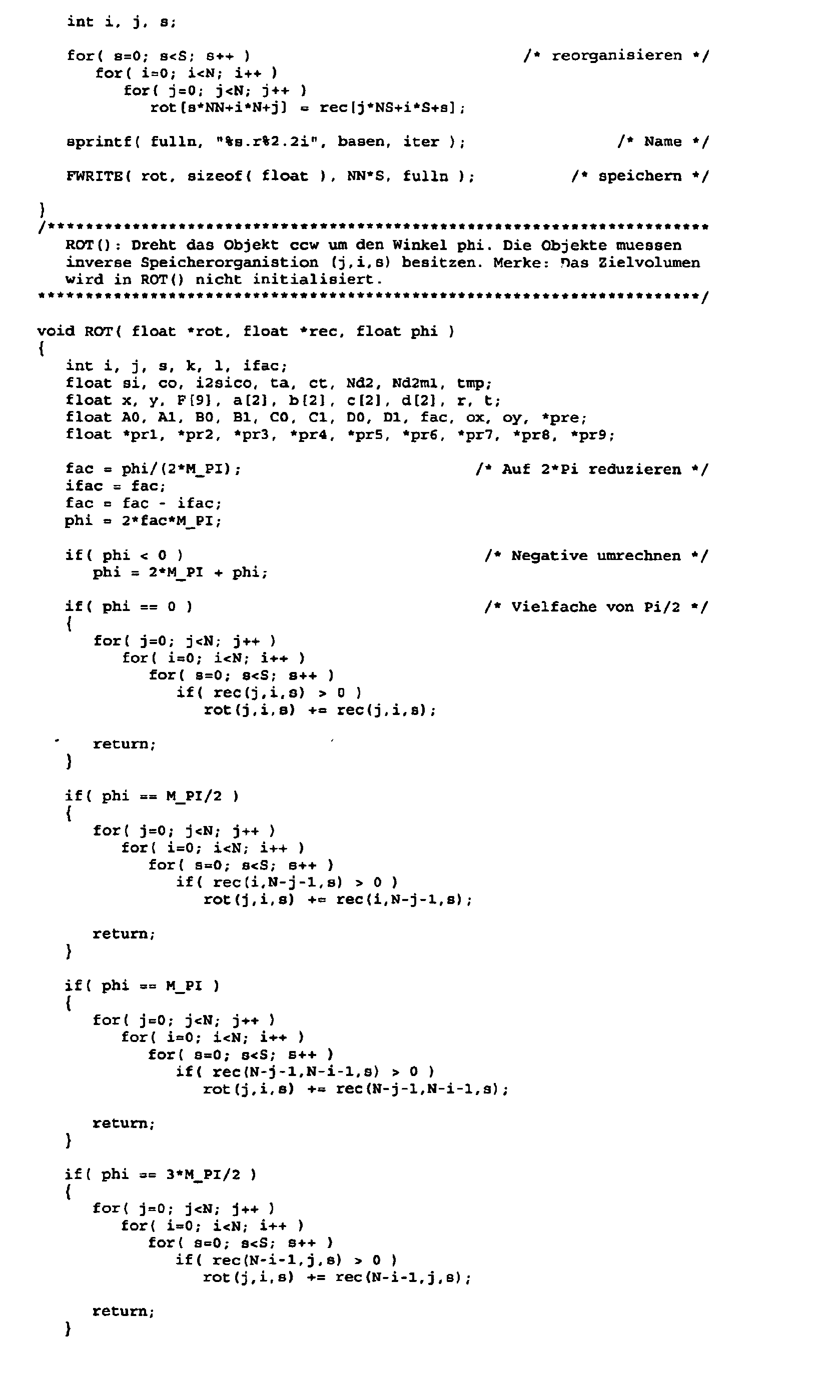

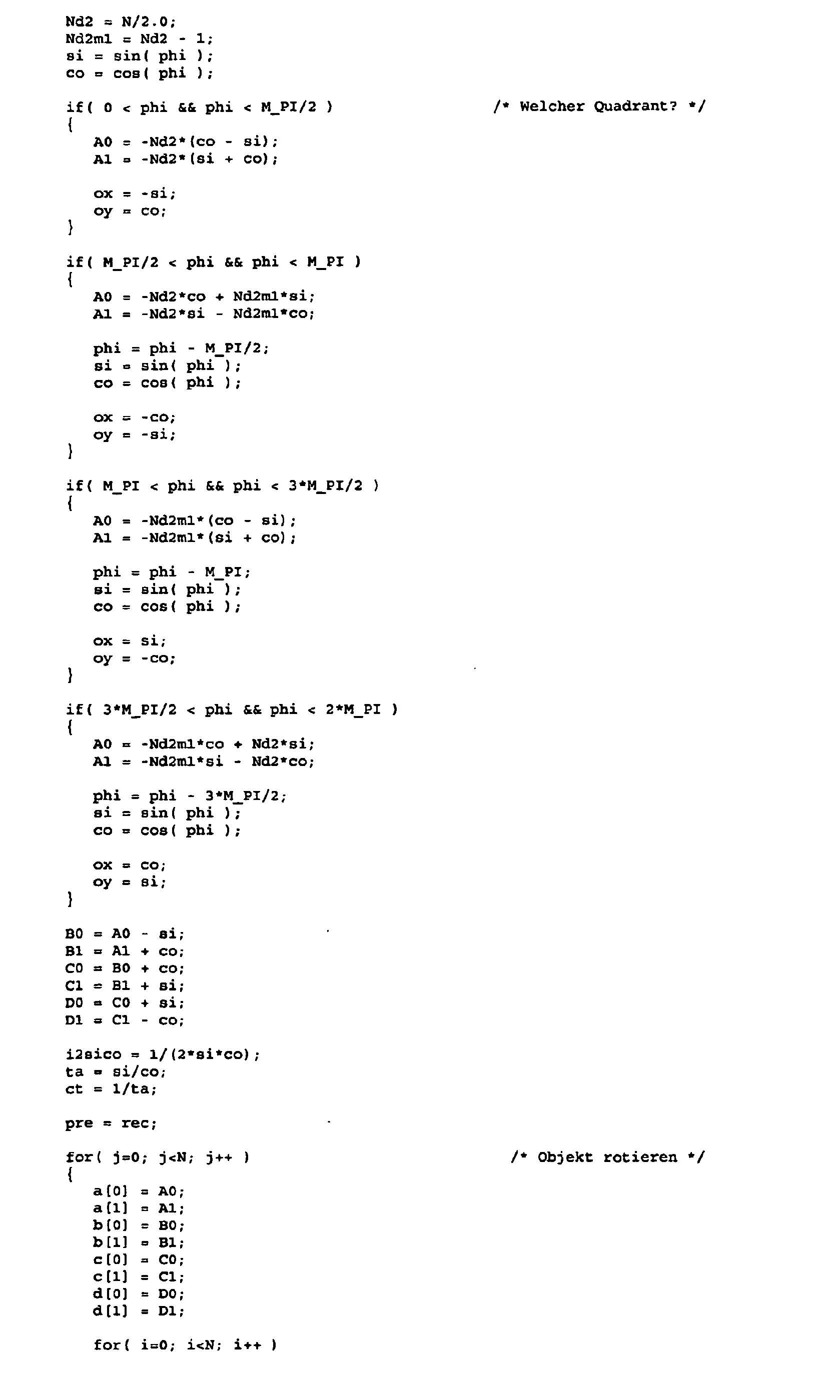

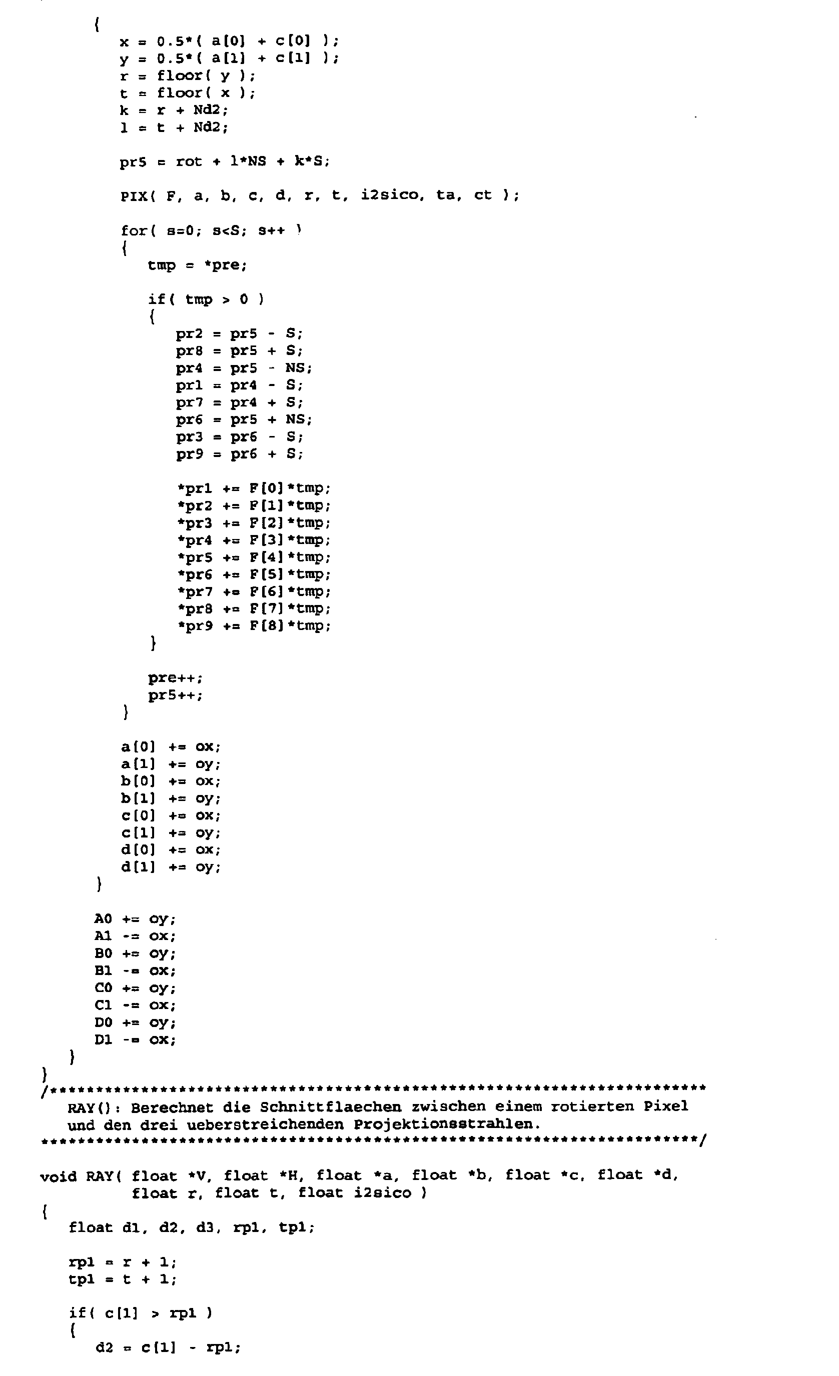

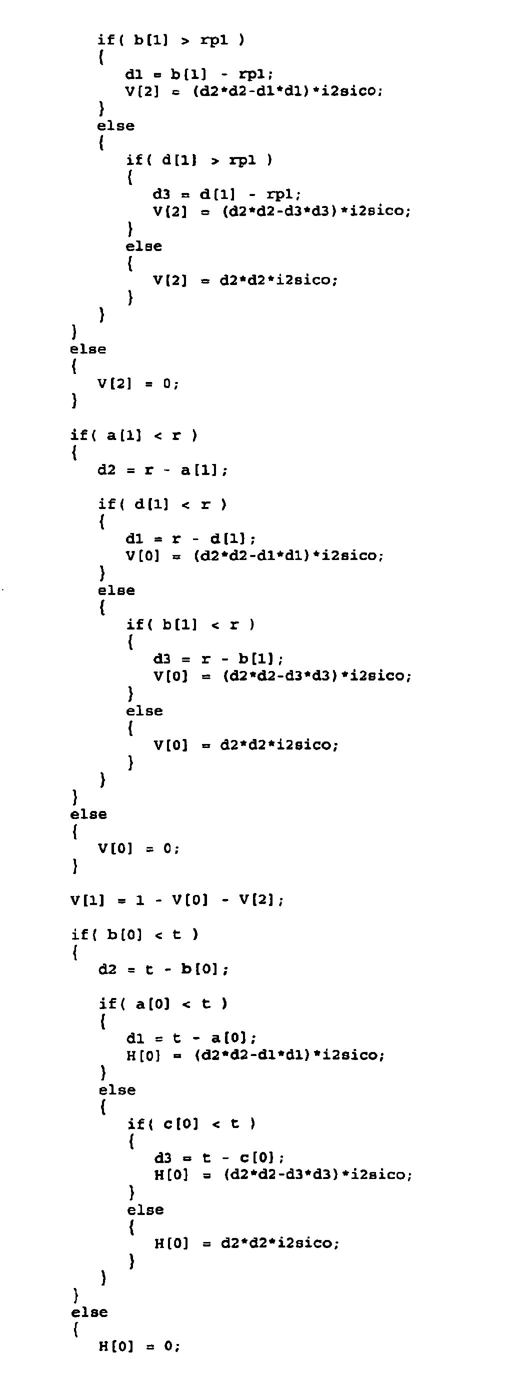

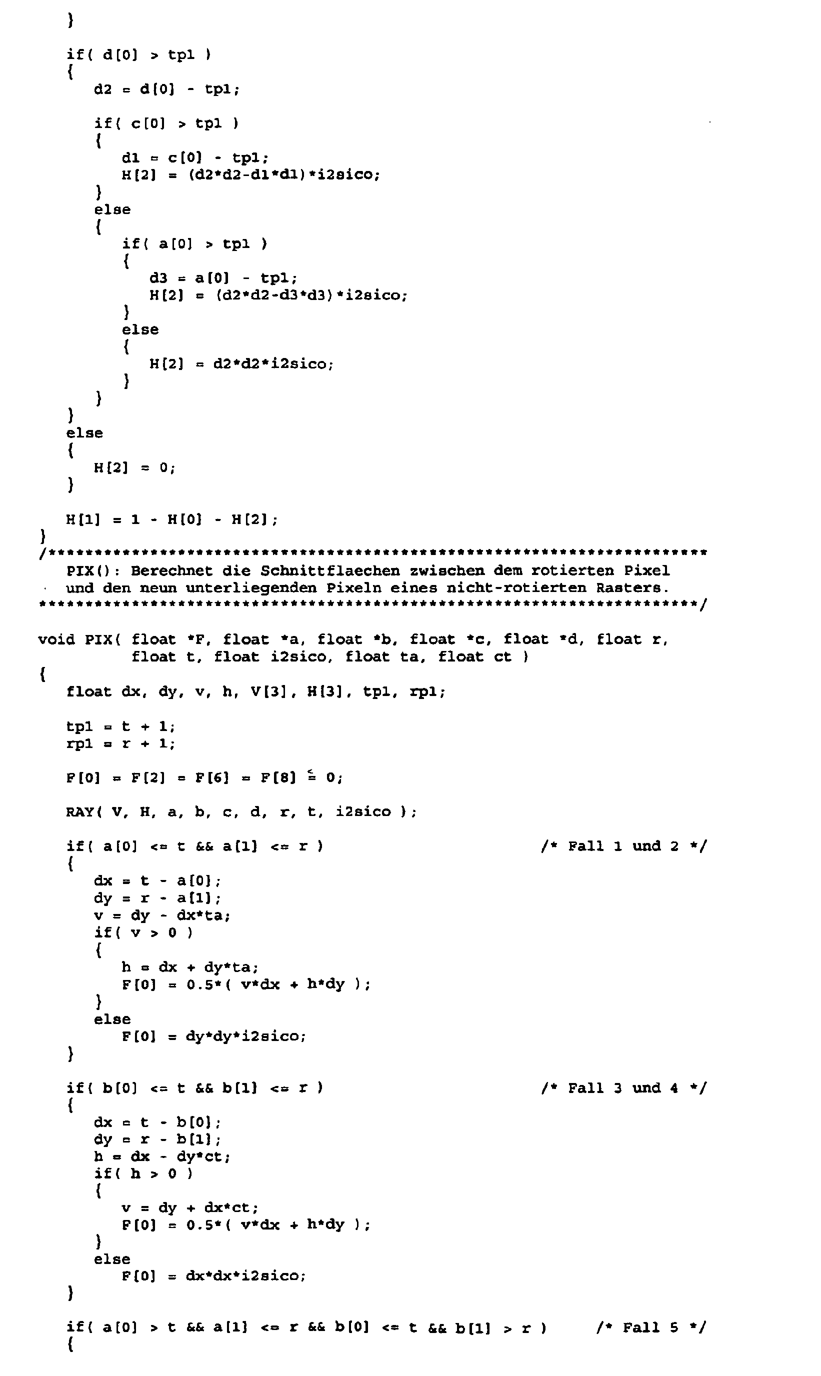

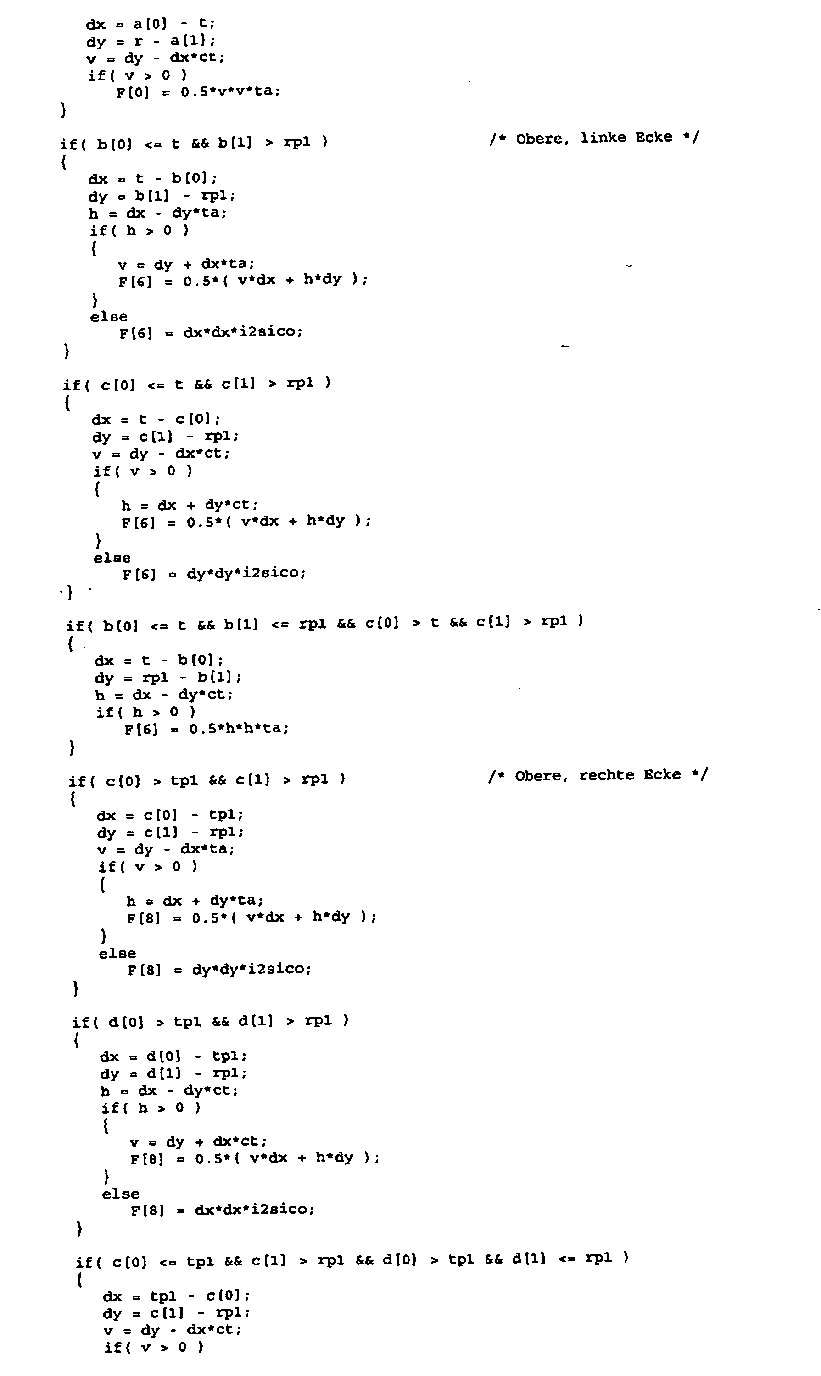

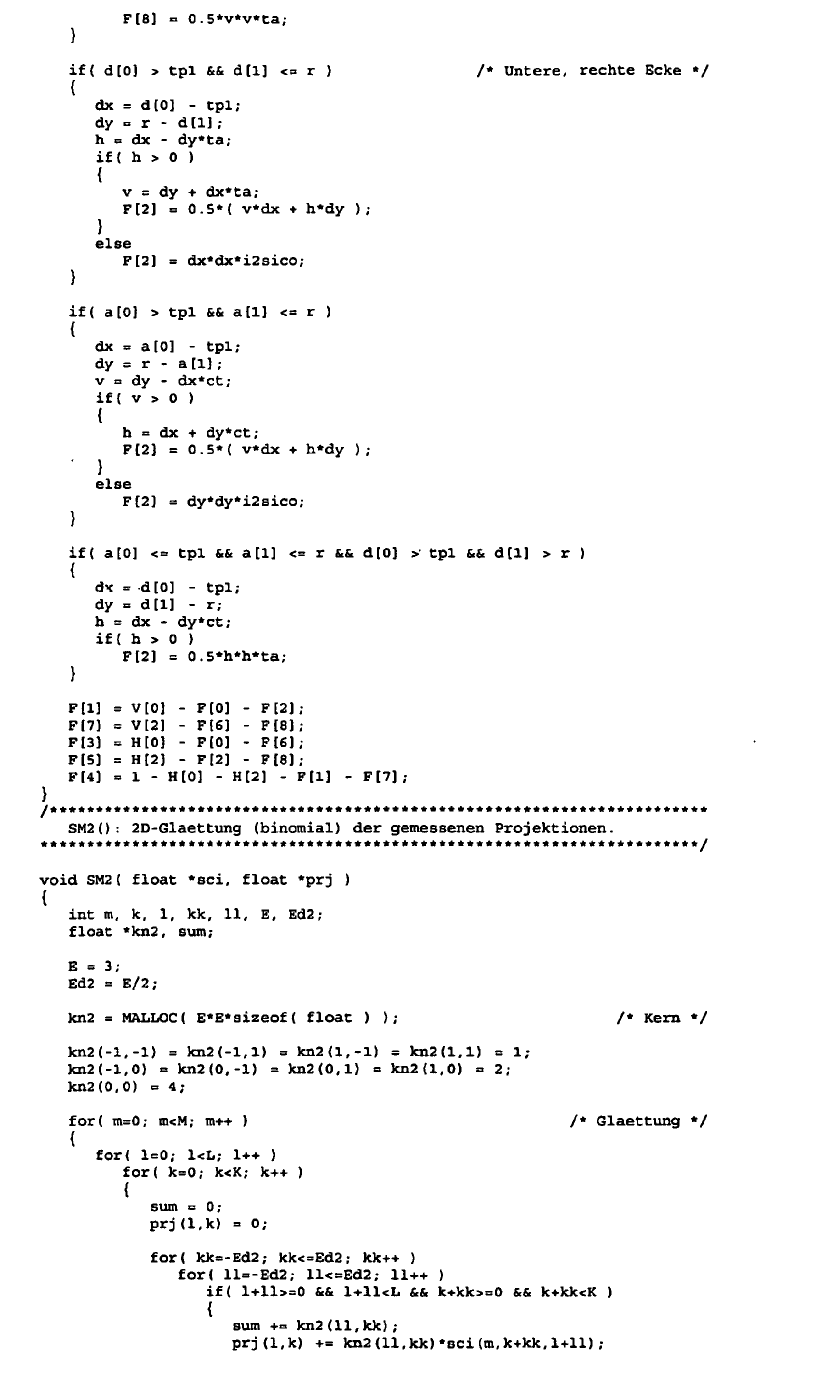

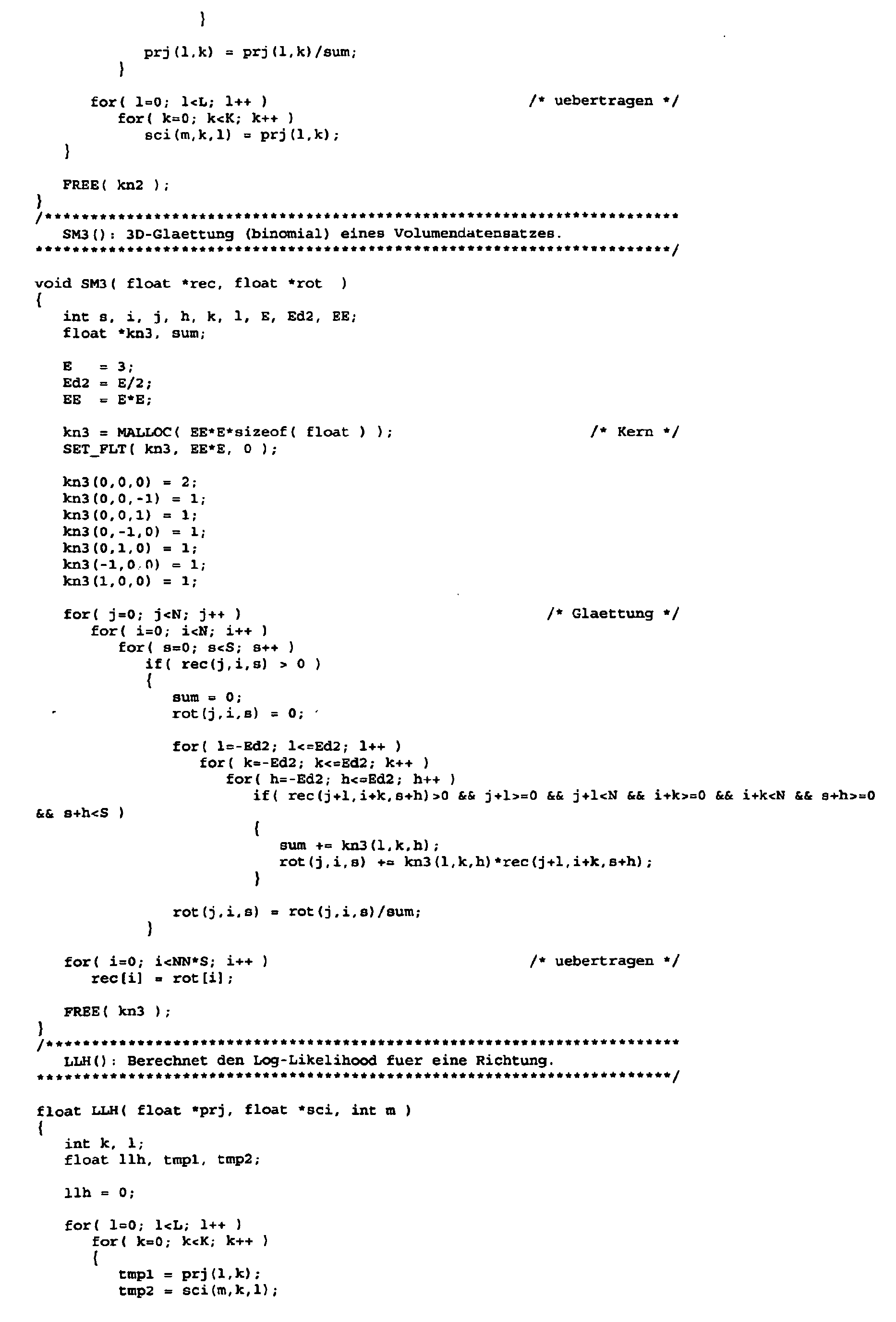

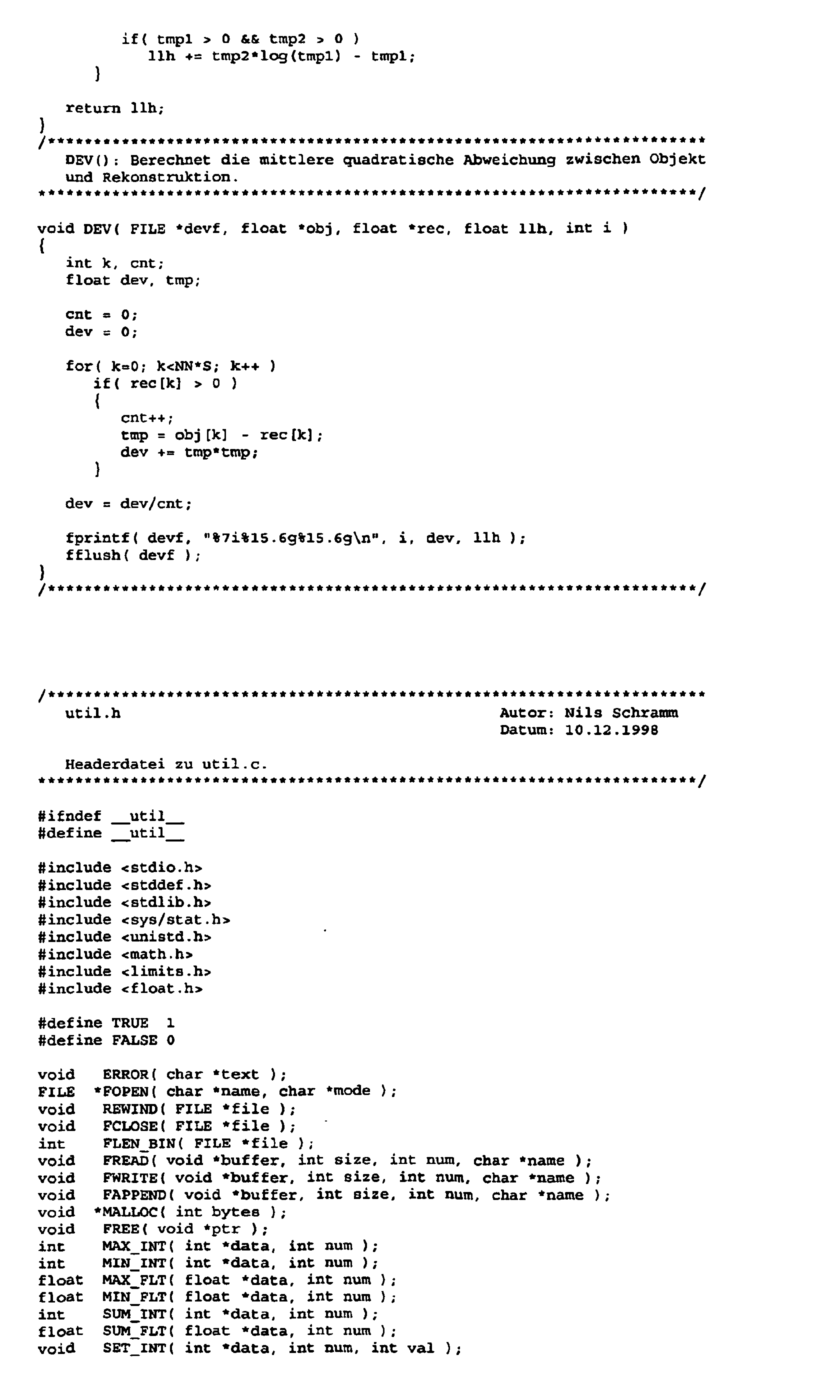

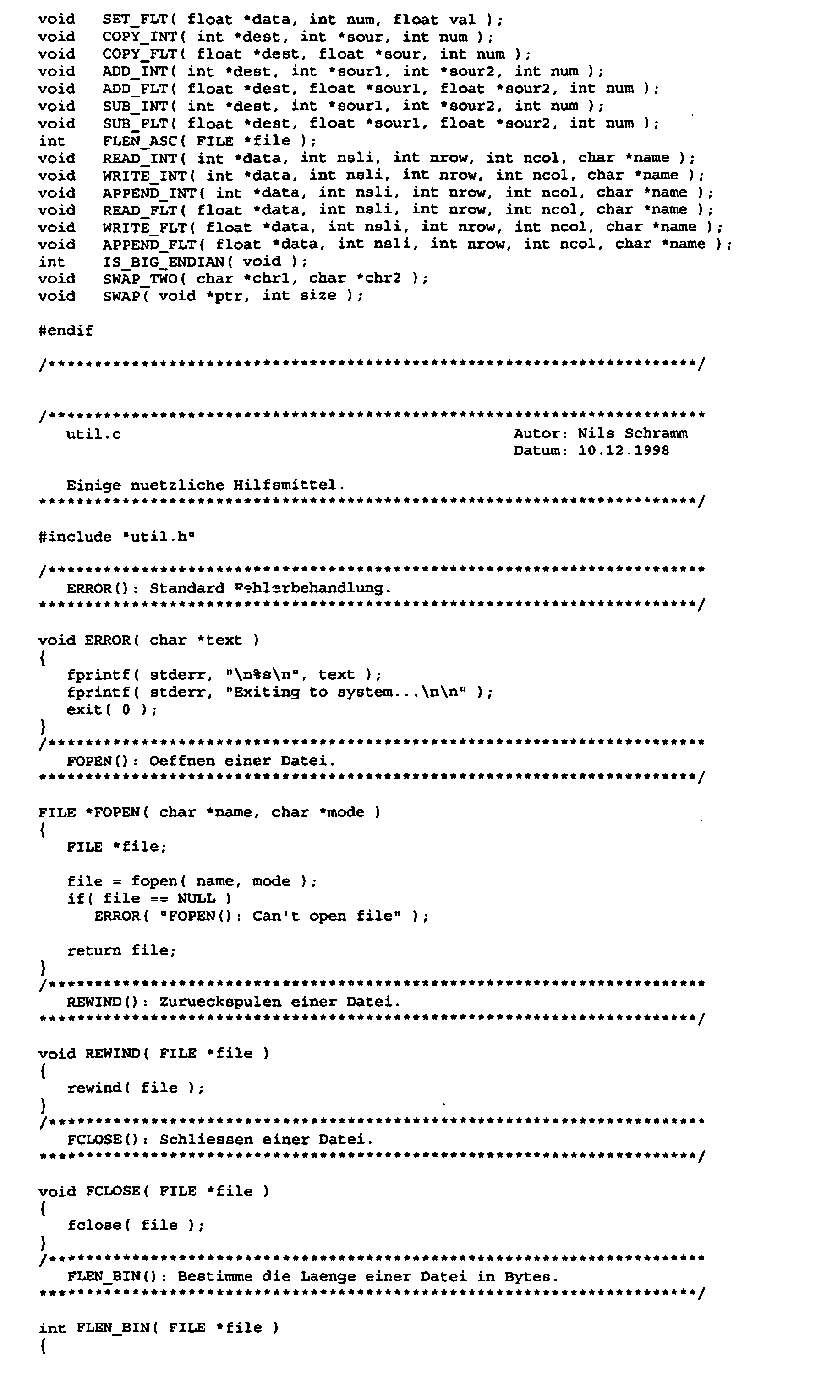

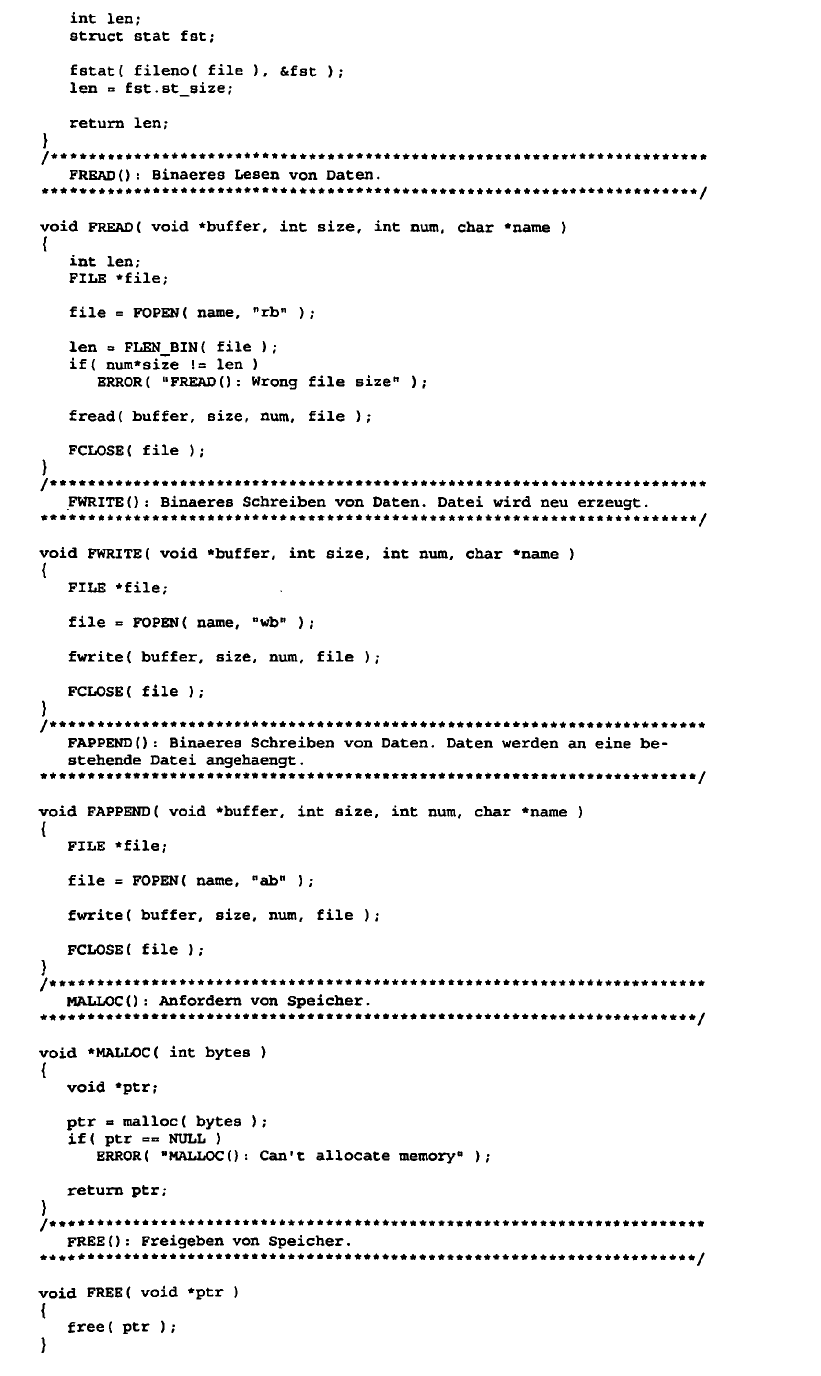

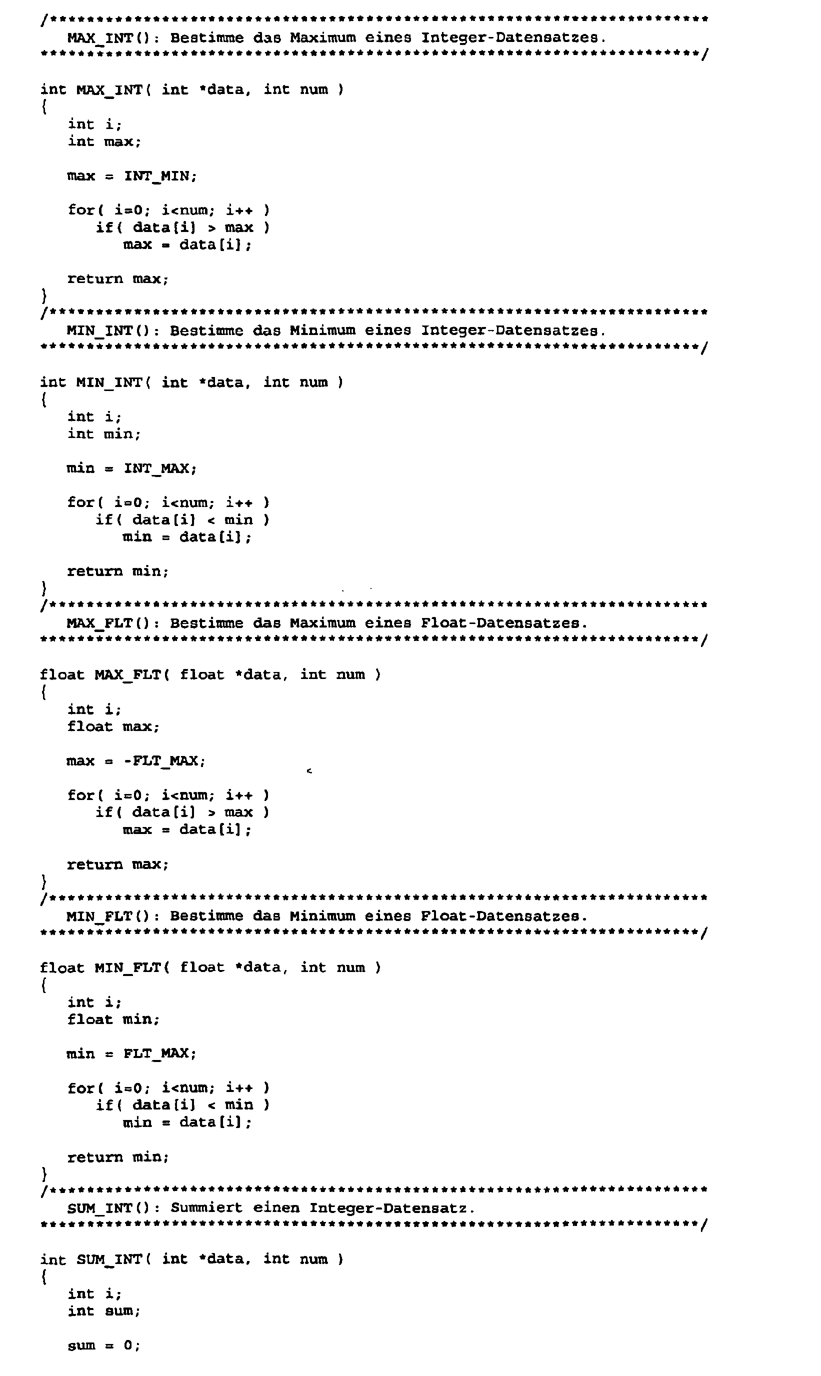

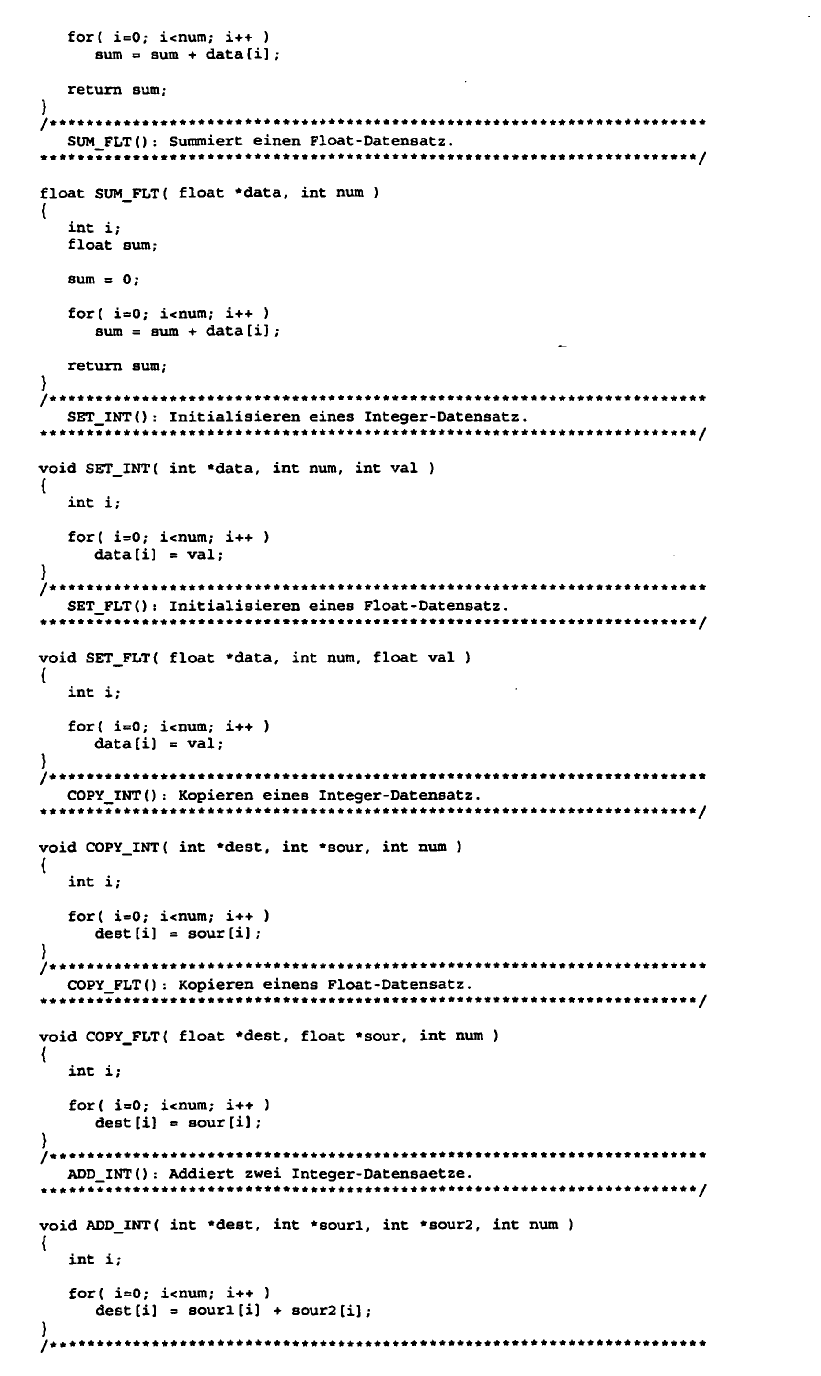

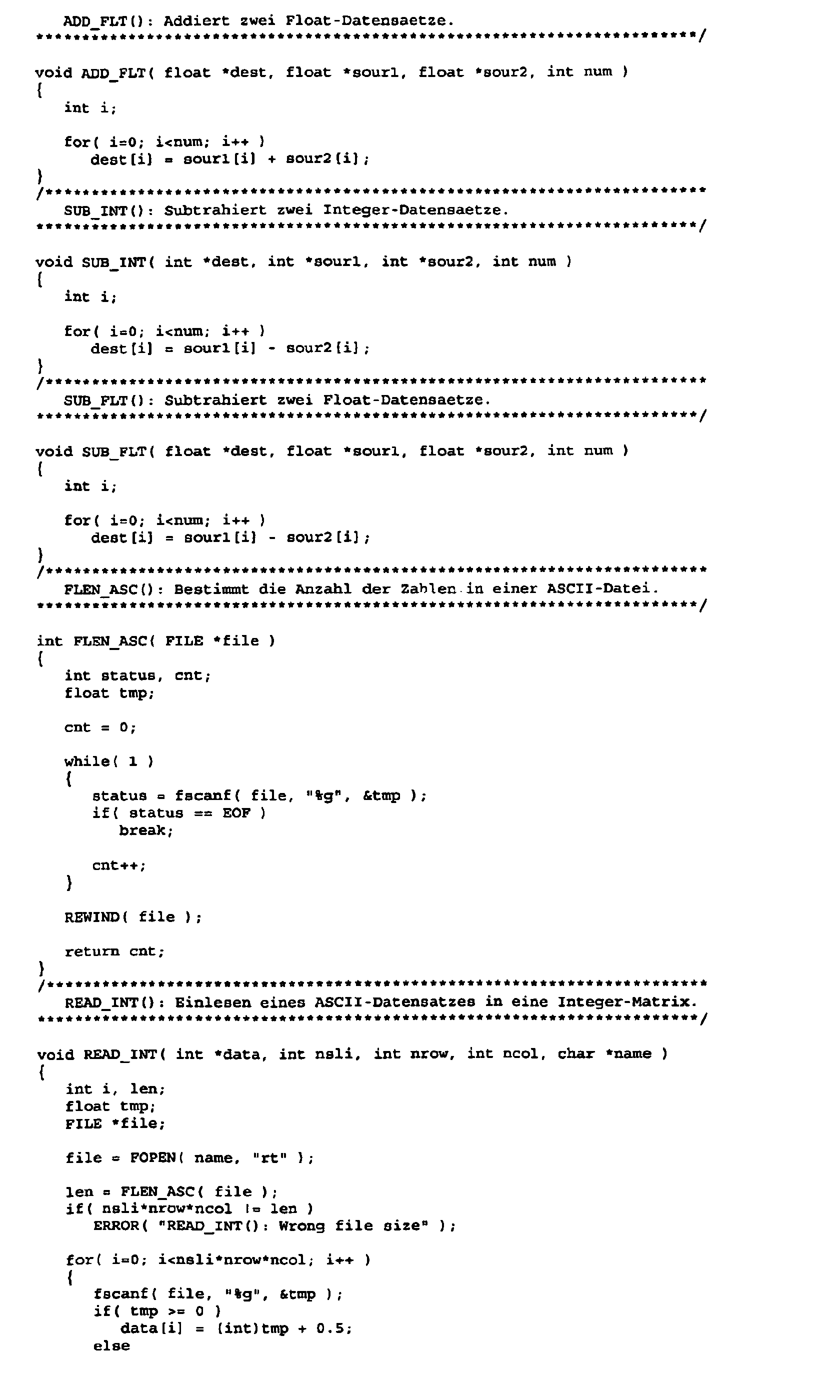

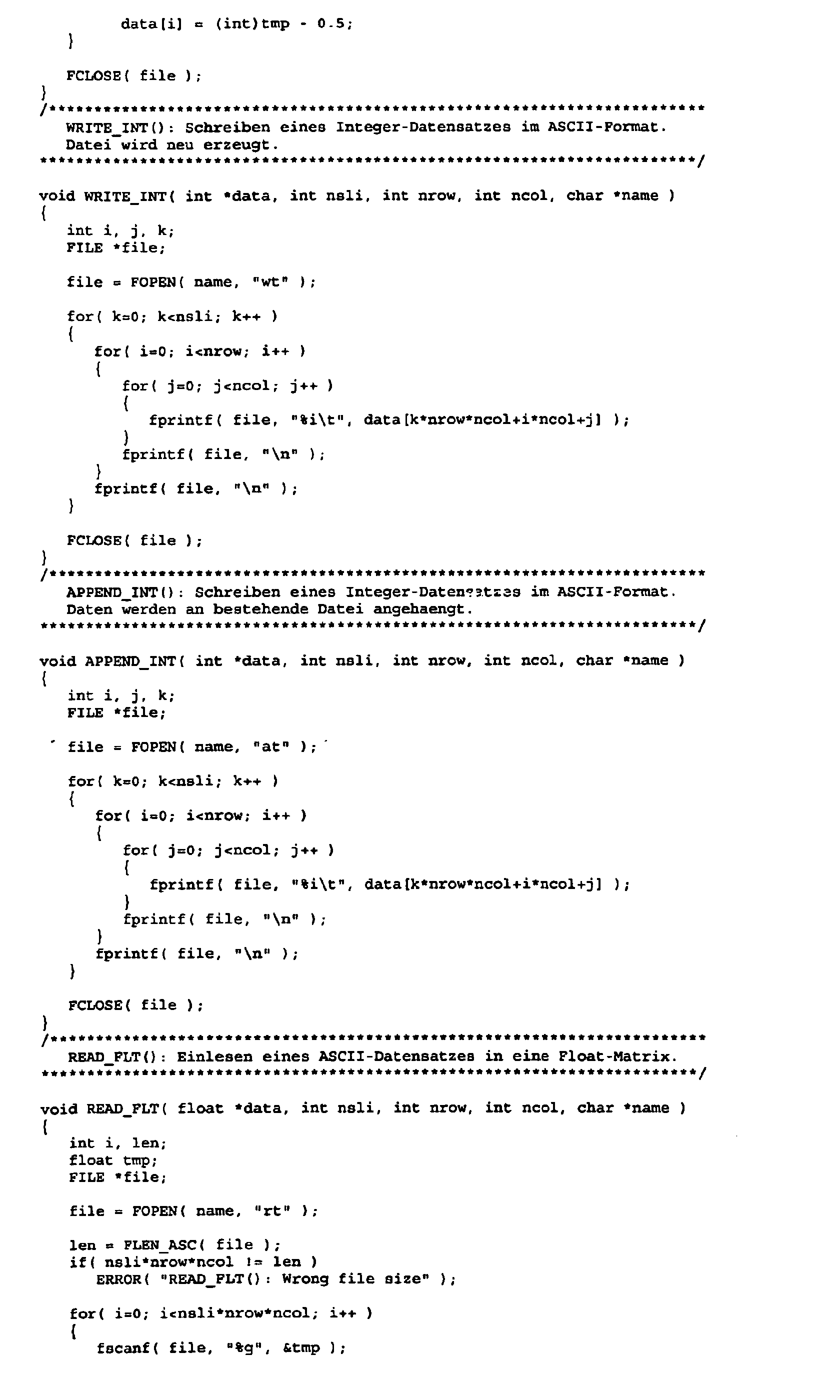

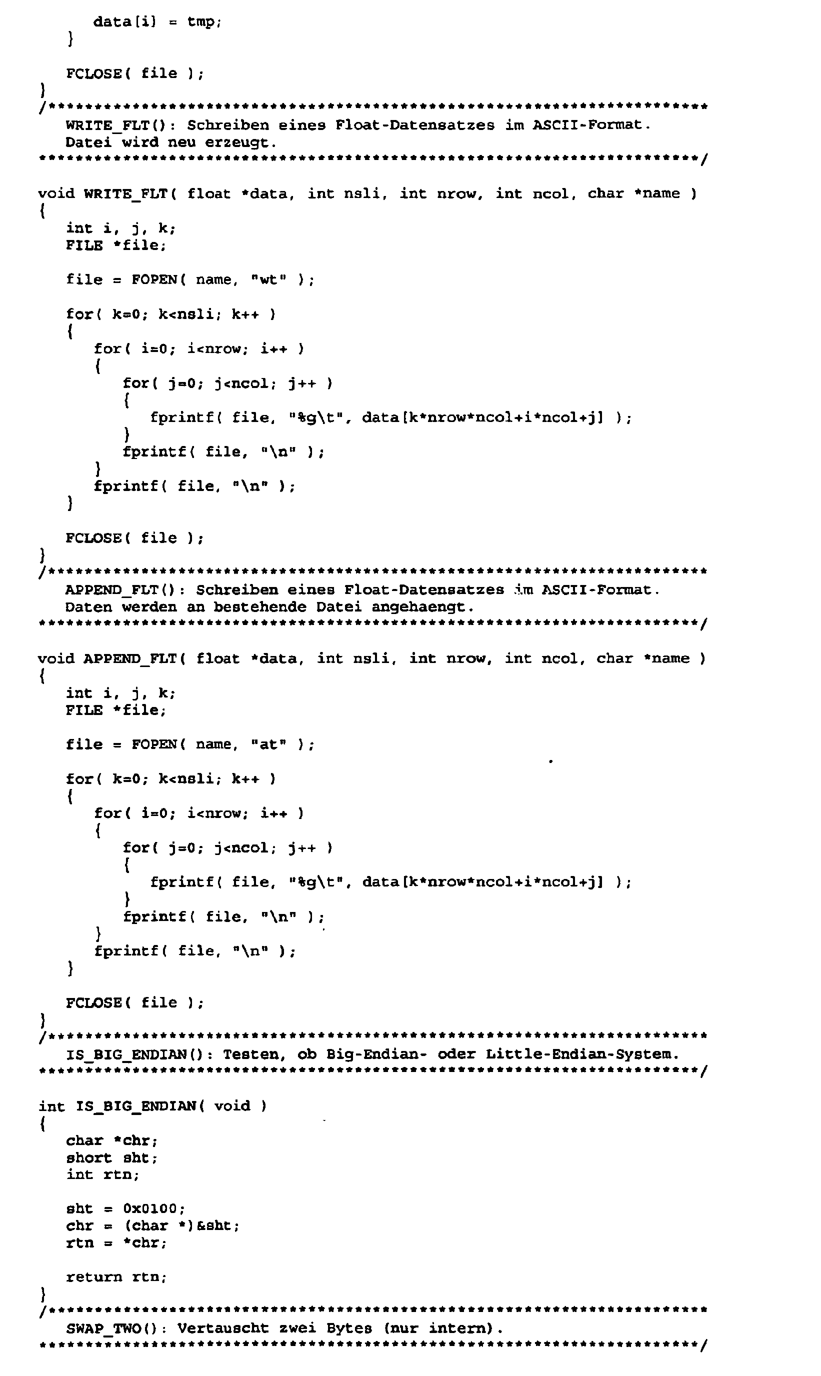

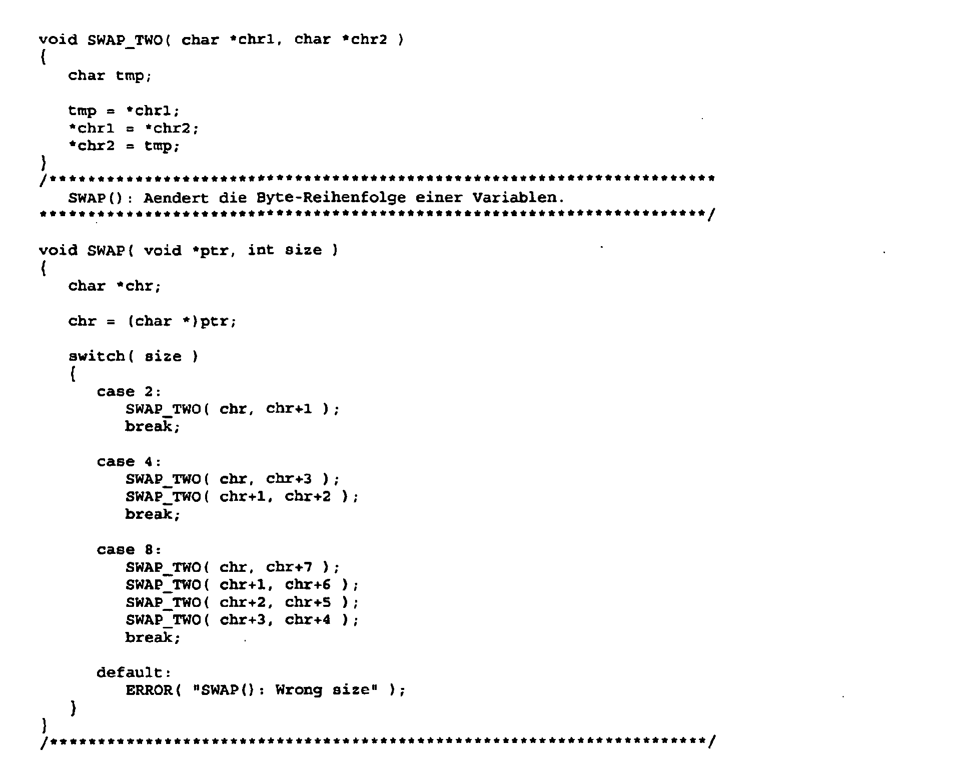

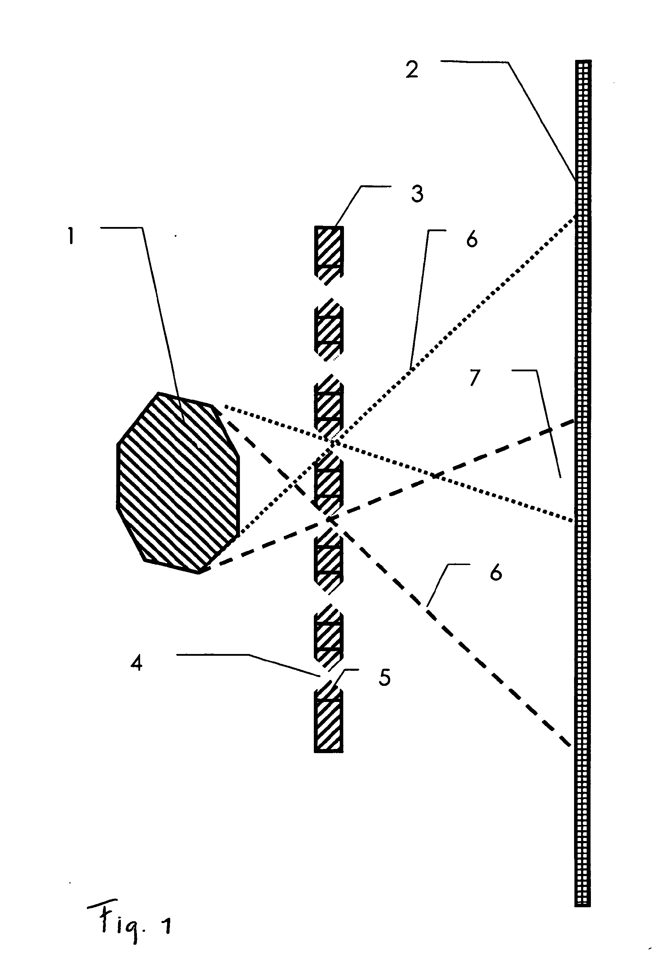

Der grundsätzliche Aufbau der Vorrichtung wird anhand der Figur verdeutlicht.

Ein Objekt 1 befindet sich näher an einem Multi-Loch-Kollimator 3 als die Detektoroberfläche 2. Der Multi-Loch-Kollimator 3 weist Löcher 4 auf, die von beiden Seiten trichterförmig in den Kollimator 3 einmünden, um so einen Durchgang von schräg auftreffenden Gammaquanten durch die Löcher zu ermöglichen. Die Spitzen 5 des Multi-Loch-Kollimators 3 bestehen aus Iridium. Die übrigen Bereiche des Multi-Loch-Kollimators 3 bestehen aus Wolfram. Gammaquanten 6 gelangen vom Objekt 1 durch die Löcher 4 hindurch auf die Detektoroberfläche 2. Das Objekt 1 wird so auf der Detektoroberfläche 2 vergrößert wiedergegeben. Zwischen den einzelnen Kegeln, die durch die Gammaquanten gebildet werden, gibt es Überschneidungsbereiche 7.

In der Figur weisen die Löcher 4 untereinander gleichmäßige Abstände auf. In einer Ausgestaltung der Erfindung sind die Abstände unregelmäßig.

## Patentansprüche

1. Verfahren zur Durchführung eines tomographischen Verfahrens unter Verwendung einer Vorrichtung mit einem Multi-Loch-Kollimator (3) und einem Detektor zur Erfassung von Gammaquanten oder Photonen (6), die durch den Multi-Loch-Kollimator hindurchtreten, bei der der Abstand zwischen einem Halter für ein Objekt (1) und dem Multi-Loch-Kollimator (3) kleiner ist als der Abstand zwischen dem Multi-Loch-Kollimator (3) und der Oberfläche (2) des Detektors, bei dem die Abstände der einzelnen Löcher im Multi-Loch-Kollimator (3) sowie die Größe und Lage des Objekts (1) so gewählt sind, dass sich die durch Gammaquanten oder Photonen (6) gebildeten Kegel auf der Oberfläche (2) des Detektors teilweise überschneiden und bei dem ein Rekonstruktionsverfahren verwendet wird, gemäß dem unterschiedliche Verteilungen der Radiopharmaka im Objekt angenommen werden, hieraus Messergebnisse berechnet werden, die die angenommenen Verteilungen erzielen würden, und als Rekonstruktionsergebnis die angenommene Verteilung ausgewählt wird, deren berechnetes Messergebnis am besten mit dem erhaltenen Messergebnis übereinstimmt, wobei die MLEM-Variante der iterativen Multi-Loch-Rekonstruktion mittels eines Algorithmus durchgeführt wird, der die ortsabhängige Sensitivität und die ortsabhängige Abbildungsfunktion einer Multi-Loch Apertur mit beliebig positionierten/ geneigten Löchern berücksichtigt.

## Claims

1. Method of carrying out a tomographic procedure, using a device with a multi-hole collimator (3) and a detector to detect gamma quanta or photons (6) which pass through the multi-hole collimator, wherein the distance between a holder for a specimen (1) and the multi-hole collimator (3) is less than the distance between the multi-hole collimator (3) and the surface (2) of the detector, wherein the intervals between the individual holes in the multi-hole collimator (3) and the size and position of the specimen (1) are chosen so that the cones which are formed by gamma quanta or photons (6) on the surface (2) of the detector partly intersect, and wherein a reconstruction procedure is used, according to which different distributions of the radiopharmaceuticals in the specimen are assumed, measurement results which would achieve the assumed distributions are calculated from them, and as the reconstruction result the assumed distribution of which the calculated measurement result agrees best with the obtained measurement result is selected, the MLEM variant of the iterative multi-hole reconstruction being carried out by means of an algorithm which takes account of the location-dependent sensitivity and location-dependent mapping function of a multi-hole aperture with arbitrarily positioned/inclined holes.

## Revendications

1. Procédé pour la mise en oeuvre d'un procédé tomographique en utilisant un dispositif comprenant un collimateur à trous multiples (3) et un détecteur pour l'enregistrement des quanta gamma ou des photons (6) qui traversent le collimateur à trous multiples, dispositif dans lequel la distance entre le support pour un objet (1) et le collimateur à trous multiples (3) est inférieure à la distance entre le collimateur à trous multiples (3) et la surface (2) du détecteur, procédé dans lequel les distances entre les trous individuels dans le collimateur à trous multiples (3) et la dimension ainsi que la position de l'objet (1) sont sélectionnées de telle sorte que les cônes formés par les quanta gamma ou par les photons (6) se chevauchent en partie à la surface (2) du détecteur et dans lequel on utilise un procédé de reconstruction conformément auquel différentes distributions des produits radiopharmaceutiques sont enregistrés dans l'objet, à partir desquelles sont calculés des résultats de mesure que produiraient les distributions enregistrées, et est sélectionnée, comme résultat de la reconstruction, la distribution enregistrée dont le résultat de mesure calculé correspond au mieux au résultat de mesure obtenu, la variante MLEM de la reconstruction itérative à trous multiples étant mise en oeuvre au moyen d'un algorithme qui prend en compte la sensibilité dépendant de la position et la fonction de reproduction dépendant de la position d'une ouverture à trous multiples possédant des trous inclinés positionnés de manière arbitraire.
